(19) Europäisches Patentamt
European Patent Office
Office européen des brevets

(11) **EP 3 876 304 A1**

(12) **EUROPEAN PATENT APPLICATION**
published in accordance with Art. 153(4) EPC

(43) Date of publication:
08.09.2021 Bulletin 2021/36

(51) Int Cl.:
*H01M 2/16* [(2006.01)]    *H01M 4/13* [(2010.01)]

(21) Application number: 19879482.8

(22) Date of filing: 09.10.2019

(86) International application number:
PCT/JP2019/039849

(87) International publication number:
WO 2020/090395 (07.05.2020 Gazette 2020/19)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 31.10.2018 JP 2018206040

(71) Applicant: Zeon Corporation
Tokyo 100-8246 (JP)

(72) Inventors:
• TAKIZAWA, Kayoko
  Tokyo 100-8246 (JP)
• TANAKA, Keiichiro
  Tokyo 100-8246 (JP)

(74) Representative: Maiwald Patent- und
Rechtsanwaltsgesellschaft mbH
Elisenhof
Elisenstraße 3
80335 München (DE)

(54) **NONAQUEOUS SECONDARY BATTERY FUNCTIONAL LAYER COMPOSITION, NONAQUEOUS SECONDARY BATTERY FUNCTIONAL LAYER, NONAQUEOUS SECONDARY BATTERY SEPARATOR, AND NONAQUEOUS SECONDARY BATTERY**

(57)    Provided is a composition for a non-aqueous secondary battery functional layer with which it is possible to form a functional layer that can cause a battery member including the functional layer to have a good balance of blocking resistance and adhesiveness to another battery member after immersion in electrolyte solution. The composition for a non-aqueous secondary battery functional layer contains a particulate polymer and non-conductive porous particles containing an organic material. The particulate polymer has a core-shell structure including a core portion and a shell portion at least partially covering an outer surface of the core portion.

EP 3 876 304 A1

**Description**

TECHNICAL FIELD

The present disclosure relates to a composition for a non-aqueous secondary battery functional layer, a functional layer for a non-aqueous secondary battery, a separator for a non-aqueous secondary battery, and a non-aqueous secondary battery.

BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. A non-aqueous secondary battery generally includes battery members such as a positive electrode, a negative electrode, and a separator that isolates the positive electrode and the negative electrode from each other and prevents short circuiting between the positive and negative electrodes.

In recent years, battery members that include a porous membrane layer for improving heat resistance and strength, an adhesive layer for adhering battery members to each other, or the like (hereinafter, such layers are also referred to by the general term "functional layer") have been used in secondary batteries. Specifically, electrodes that further include a functional layer formed on an electrode substrate in which an electrode mixed material layer is provided on a current collector and separators that include a functional layer formed on a separator substrate have been used as battery members.

For example, Patent Literature (PTL) 1 reports that by using a porous membrane slurry for a secondary battery that contains polymer particles having a number-average particle diameter and a BET specific surface area that are within specific ranges as non-conductive particles, it is possible to form a porous membrane for a secondary battery that has high uniformity of thickness, excellent reliability in high-temperature environments, and excellent ion permeability.

CITATION LIST

Patent Literature

PTL 1: WO2013/147006A1

SUMMARY

(Technical Problem)

In the production process of a secondary battery, a battery member produced in an elongated form is typically wound up as produced to then be stored and transported. However, when a battery member that includes a functional layer is stored and transported in a wound up state, adjacent battery members may become stuck together via the functional layer (i.e., blocking may occur), leading to the occurrence of faults and reduction of productivity. Therefore, it is desirable for a battery member that includes a functional layer to display performance in terms of inhibiting blocking during a production process (i.e., to have blocking resistance).

On the other hand, it is also desirable for a battery member that includes a functional layer to display high adhesiveness to another battery member after being immersed in electrolyte solution from a viewpoint of enhancing electrical characteristics of a secondary battery.

However, there is room for improvement of a battery member that includes the functional layer according to the conventional technique described above in terms of causing the battery member to display excellent blocking resistance while also increasing adhesiveness of the battery member to another battery member after immersion in electrolyte solution.

Accordingly, one object of the present disclosure is to provide a composition for a non-aqueous secondary battery functional layer with which it is possible to form a functional layer that can cause a battery member including the functional layer to have a good balance of blocking resistance and adhesiveness to another battery member after immersion in electrolyte solution.

Another object of the present disclosure is to provide a functional layer for a non-aqueous secondary battery that can cause a battery member including the functional layer to have a good balance of blocking resistance and adhesiveness to another battery member after immersion in electrolyte solution.

Another object of the present disclosure is to provide a separator for a non-aqueous secondary battery that includes the aforementioned functional layer and that can have a good balance of blocking resistance and adhesiveness to an electrode after immersion in electrolyte solution.

Another object of the present disclosure is to provide a non-aqueous secondary battery that includes the aforementioned separator.

(Solution to Problem)

The inventors conducted diligent investigation with the aim of solving the problem set forth above. The inventors discovered that it is possible to form a functional layer that can cause a battery member including the functional layer to have a good balance of blocking resistance and adhesiveness to another battery member after immersion in electrolyte solution by using a composition for a functional layer that contains a particulate polymer having a specific core-shell structure and non-conductive porous particles containing an organic material, and, in this manner, the inventors completed the present disclosure.

Specifically, the present disclosure aims to advantageously solve the problem set forth above, and a presently disclosed composition for a non-aqueous secondary battery functional layer comprises: a particulate polymer; and non-conductive porous particles containing an organic material, wherein the particulate polymer has a core-shell structure including a core portion and a shell portion at least partially covering an outer surface of the core portion. By using a composition for a non-aqueous secondary battery functional layer that contains a particulate polymer having a specific core-shell structure and non-conductive porous particles containing an organic material in this manner, it is possible to form a functional layer that can cause a battery member including the functional layer to have a good balance of blocking resistance and adhesiveness to another battery member after immersion in electrolyte solution.

In the presently disclosed composition for a non-aqueous secondary battery functional layer, the non-conductive porous particles preferably have a BET specific surface area of not less than 20 $m^2/cm^3$ and not more than 100 $m^2/cm^3$. When the BET specific surface area of the non-conductive porous particles is within the specific range set forth above, it is possible to improve injectability of electrolyte solution in production of a secondary battery using a battery member that includes a functional layer while also enhancing high-temperature cycle characteristics of the secondary battery that includes the battery member.

Note that the "BET specific surface area" of non-conductive porous particles referred to in the present disclosure is the nitrogen adsorption specific surface area measured by the BET method.

In the presently disclosed composition for a non-aqueous secondary battery functional layer, the non-conductive porous particles preferably have a volume-average particle diameter D50 that is not less than 0.5 times and less than 1 time a volume-average particle diameter D50 of the particulate polymer. When the ratio of the volume-average particle diameter D50 of the non-conductive porous particles relative to the volume-average particle diameter D50 of the particulate polymer is within the specific range set forth above in this manner, it is possible to improve injectability of electrolyte solution in production of a secondary battery using a battery member that includes a functional layer while also further increasing adhesiveness of the battery member including the functional layer to another battery member after immersion in electrolyte solution.

Note that the "volume-average particle diameter D50" referred to in the present disclosure is the particle diameter at which, in a particle size distribution (by volume) measured by laser diffraction, cumulative volume calculated from a small diameter end of the distribution reaches 50%.

In the presently disclosed composition for a non-aqueous secondary battery functional layer, a volume ratio of the non-conductive porous particles relative to the particulate polymer (non-conductive porous particles/particulate polymer) is preferably not less than 20/100 and less than 100/100. When the volume ratio of the non-conductive porous particles relative to the particulate polymer (non-conductive porous particles/particulate polymer) is within the specific range set forth above in this manner, it is possible to improve injectability of electrolyte solution in production of a secondary battery using a battery member that includes a functional layer while also further increasing adhesiveness of the battery member including the functional layer to another battery member after immersion in electrolyte solution. Moreover, high-temperature cycle characteristics of a secondary battery can be enhanced.

In the presently disclosed composition for a non-aqueous secondary battery functional layer, the non-conductive porous particles preferably further contain an inorganic material. When the non-conductive porous particles further contain an inorganic material in this manner, it is possible to increase the heat resistance of a battery member that includes a functional layer.

In the presently disclosed composition for a non-aqueous secondary battery functional layer, a mass ratio of the core portion relative to the shell portion (core portion/shell portion) in the particulate polymer is preferably not less than 60/40 and not more than 99/1. When the mass ratio of the core portion relative to the shell portion (core portion/shell portion) is within the specific range set forth above in this manner, a battery member that includes a functional layer can have an even better balance of blocking resistance and adhesiveness to another battery member after immersion in electrolyte solution. Moreover, high-temperature cycle characteristics of a secondary battery can be enhanced.

Moreover, the present disclosure aims to advantageously solve the problem set forth above, and a presently disclosed functional layer for a non-aqueous secondary battery is formed using any one of the compositions for a non-aqueous secondary battery functional layer set forth above. A functional layer for a non-aqueous secondary battery that is formed using any one of the compositions for a non-aqueous secondary battery functional layer set forth above in this manner can cause a battery member that includes the functional layer to have a good balance of blocking resistance and adhesiveness to another battery member after immersion in electrolyte solution.

Furthermore, the present disclosure aims to advantageously solve the problem set forth above, and a presently disclosed separator for a non-aqueous secondary battery comprises the functional layer for a non-aqueous secondary battery set forth above. A separator for a non-aqueous secondary battery that includes the functional layer for a non-aqueous secondary battery set forth above in this manner can have a good balance of blocking resistance and adhesiveness to an electrode after immersion in electrolyte solution.

Also, the present disclosure aims to advantageously solve the problem set forth above, and a presently disclosed non-aqueous secondary battery comprises the separator for a non-aqueous secondary battery set forth above. A non-aqueous secondary battery that includes the separator set forth above in this manner has excellent adhesiveness of the separator to an electrode after immersion in electrolyte solution and high performance.

(Advantageous Effect)

According to the present disclosure, it is possible to provide a composition for a non-aqueous secondary battery functional layer with which it is possible to form a functional layer that can cause a battery member including the functional layer to have a good balance of blocking resistance and adhesiveness to another battery member after immersion in electrolyte solution.

Moreover, according to the present disclosure, it is possible to provide a functional layer for a non-aqueous secondary battery that can cause a battery member including the functional layer to have a good balance of blocking resistance and adhesiveness to another battery member after immersion in electrolyte solution.

Furthermore, according to the present disclosure, it is possible to provide a separator for a non-aqueous secondary battery that includes the aforementioned functional layer and that can have a good balance of blocking resistance and adhesiveness to an electrode after immersion in electrolyte solution.

Also, according to the present disclosure, it is possible to provide a non-aqueous secondary battery that includes the aforementioned separator.

DETAILED DESCRIPTION

The following provides a detailed description of embodiments of the present disclosure.

The presently disclosed composition for a non-aqueous secondary battery functional layer is used as a material in production of the presently disclosed functional layer for a non-aqueous secondary battery. Moreover, the presently disclosed functional layer for a non-aqueous secondary battery is formed using the presently disclosed composition for a non-aqueous secondary battery functional layer. Furthermore, the presently disclosed separator for a non-aqueous secondary battery includes the presently disclosed functional layer for a non-aqueous secondary battery. Also, the presently disclosed non-aqueous secondary battery includes at least the presently disclosed separator for a non-aqueous secondary battery.

(Composition for non-aqueous secondary battery functional layer)

The presently disclosed composition for a non-aqueous secondary battery functional layer is a slurry composition that contains a particulate polymer having a specific core-shell structure and non-conductive porous particles containing an organic material, that optionally further contains other components, and that has water or the like as a dispersion medium. As a result of the presently disclosed composition for a non-aqueous secondary battery functional layer containing a particulate polymer having a specific core-shell structure and non-conductive porous particles containing an organic material, the presently disclosed composition for a non-aqueous secondary battery functional layer can form a functional layer that can cause a battery member (separator or electrode) including the functional layer to have a good balance of blocking resistance and adhesiveness to another battery member after immersion in electrolyte solution.

<Particulate polymer>

The particulate polymer is a component that can cause a battery member that includes a functional layer to have a good balance of blocking resistance and adhesiveness to another battery member after immersion in electrolyte solution.

The particulate polymer has a core-shell structure including a core portion and a shell portion at least partially covering an outer surface of the core portion. The shell portion preferably partially covers the outer surface of the core portion from a viewpoint of causing a battery member that includes a functional layer to have an even better balance of blocking resistance and adhesiveness to another battery member after immersion in electrolyte solution. In other words, it is preferable that the shell portion of the particulate polymer covers part of the outer surface of the core portion but does not completely cover the outer surface of the core portion. In terms of external appearance, even in a situation in which the outer surface of the core portion appears to be completely covered by the shell portion, the shell portion is still considered to be a shell portion that partially covers the outer surface of the core portion so long as pores are formed that pass between inside and outside of the shell portion. Accordingly, a particulate polymer that includes a shell portion having fine pores that pass between an outer surface of the shell portion (i.e., a circumferential surface of the particulate polymer) and an outer surface of a core portion, for example, also corresponds to the preferred particulate polymer set forth above in which the shell portion partially covers the outer surface of the core portion.

Note that the particulate polymer may include any constituent element other than the core portion and the shell portion described above so long as the expected effects are not significantly lost as a result. Specifically, the particulate polymer may, for example, include a portion inside of the core portion that is formed of a different polymer to the core portion. In one specific example, a residual seed particle may be present inside of the core portion in a situation in which seed particles are used in production of the particulate polymer by seeded polymerization. However, from a viewpoint of more noticeably displaying the expected effects, it is preferable that the particulate polymer is composed of only the core portion and the shell portion.

«Core portion»

A polymer that forms the core portion of the particulate polymer can include any known monomer units without any specific limitations and preferably includes a (meth)acrylic acid alkyl ester monomer unit, an acidic group-containing monomer unit, a nitrile group-containing monomer unit, a cross-linkable monomer unit, and/or the like, for example.

Note that the phrase "includes a monomer unit" as used in the present specification means that "a polymer obtained using the monomer includes a repeating unit derived from the monomer".

[(Meth)acrylic acid alkyl ester monomer unit]

A (meth)acrylic acid ester monomer unit is a repeating unit that is derived from a (meth)acrylic acid ester monomer. In the present specification, "(meth)acryl" is used to indicate "acryl" or "methacryl". When the polymer forming the core portion includes a (meth)acrylic acid ester monomer unit, the glass-transition temperature of the polymer forming the core portion can be lowered well, which makes it possible to increase deformability of the polymer during pressing and to further increase adhesiveness of a battery member that includes a functional layer to another battery member after immersion in electrolyte solution.

A (meth)acrylic acid alkyl ester monomer in which there is one ethylenically unsaturated bond may be used as a (meth)acrylic acid ester monomer. The (meth)acrylic acid alkyl ester monomer may be a (meth)acrylic acid alkyl ester monomer that includes a linear alkyl group or a (meth)acrylic acid alkyl ester monomer that includes a branched alkyl group. Examples of (meth)acrylic acid ester monomers include acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. Of these (meth)acrylic acid ester monomers, butyl acrylate and methyl methacrylate are more preferable from a viewpoint of even further increasing adhesiveness of a battery member that includes a functional layer to another battery member after immersion in electrolyte solution. Note that just one of these (meth)acrylic acid ester monomers may be used, or two or more of these (meth)acrylic acid ester monomers may be used in combination.

The proportion constituted by a (meth)acrylic acid ester monomer unit included in the polymer forming the core portion among all monomer units included in the particulate polymer, when all monomer units included in the particulate polymer are taken to be 100.0 mass%, is preferably 5.0 mass% or more, and more preferably 30.0 mass% or more, and is preferably 60.0 mass% or less, and more preferably 52.8 mass% or less. When the proportion constituted by a (meth)acrylic acid ester monomer unit included in the polymer forming the core portion among all monomer units included in the particulate polymer is not less than any of the lower limits set forth above, the glass-transition temperature of the polymer forming the core portion can be lowered even better, which makes it possible to further increase deformability of the polymer during pressing and to even further increase adhesiveness of a battery member that includes a functional layer to another battery member after immersion in electrolyte solution. On the other hand, when the proportion constituted by a (meth)acrylic acid ester monomer unit included in the polymer forming the core portion among all monomer units included in the particulate polymer is not more than any of the upper limits set forth above, the degree of swelling in electrolyte solution of the polymer forming the core portion can inhibited from increasing excessively, good adhesiveness of a battery member that includes a functional layer to another battery member after immersion in electrolyte solution can be maintained, and sufficiently good high-temperature cycle characteristics of a secondary battery can be ensured.

[Acidic group-containing monomer unit]

An acidic group-containing monomer unit is a repeating unit that is derived from an acidic group-containing monomer. When the polymer forming the core portion includes an acidic group-containing monomer unit, polymerization stability during formation of the polymer forming the core portion can be increased, and the formation of aggregates can be inhibited well.

Examples of acidic group-containing monomers that can form an acid group-containing monomer unit include carboxy group-containing monomers, sulfo group-containing monomers, and phosphate group-containing monomers.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, $\alpha$-acetoxyacrylic acid, $\beta$-trans-aryloxyacrylic acid, and $\alpha$-chloro-$\beta$-E-methoxyacrylic acid.

Examples of dicarboxylic acids include maleic acid, fumaric acid, and itaconic acid.

Examples of derivatives of dicarboxylic acids include methylmaleic acid, dimethyl maleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Moreover, an acid anhydride that produces a carboxy group upon hydrolysis can also be used as a carboxy group-containing monomer.

Examples of sulfo group-containing monomers include styrene sulfonic acid, vinyl sulfonic acid, methyl vinyl sulfonic acid, (meth)allyl sulfonic acid, 3-allyloxy-2-hydroxypropane sulfonic acid, and 2-acrylamido-2-methylpropane sulfonic acid.

In the present specification, "(meth)allyl" is used to indicate "allyl" and/or "methallyl".

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

Note that in the present disclosure, "(meth)acryloyl" is used to indicate "acryloyl" and/or "methacryloyl".

These acidic group-containing monomers may be used individually or as a combination of two or more types. Of these acidic group-containing monomers, methacrylic acid is preferable from a viewpoint of further increasing polymerization stability in formation of the polymer forming the core portion.

The proportion constituted by an acidic group-containing monomer unit included in the polymer forming the core portion among all monomer units included in the particulate polymer, when all monomer units included in the particulate polymer are taken to be 100.0 mass%, is preferably 0.1 mass% or more, and more preferably 0.5 mass% or more, and is preferably 5.0 mass% or less, more preferably 4.0 mass% or less, and particularly preferably 2.8 mass% or less. When the proportion constituted by an acidic group-containing monomer unit included in the polymer forming the core portion among all monomer units included in the particulate polymer is not less than any of the lower limits set forth above, polymerization stability in formation of the polymer forming the core portion can be further increased, and formation of aggregates can be inhibited even better. On the other hand, when the proportion constituted by an acidic group-containing monomer unit included in the polymer forming the core portion among all monomer units included in the particulate polymer is not more than any of the upper limits set forth above, the water content of the polymer forming the core portion can be inhibited from increasing excessively, and sufficiently good high-temperature cycle characteristics of a secondary battery can be ensured.

[Nitrile group-containing monomer unit]

A nitrile group-containing monomer unit is a repeating unit that is derived from a nitrile group-containing monomer. When the polymer forming the core portion includes a nitrile group-containing monomer unit, the glass-transition temperature of the polymer forming the core portion can be lowered well, which makes it possible to increase deformability of the polymer during pressing and to further increase adhesiveness of a battery member that includes a functional layer to another battery member after immersion in electrolyte solution.

Examples of nitrile group-containing monomers that can form a nitrile group-containing monomer unit include α,β-ethylenically unsaturated nitrile monomers. Specifically, any α,β-ethylenically unsaturated compound that includes a nitrile group can be used as an α,β-ethylenically unsaturated nitrile monomer without any specific limitations, and examples thereof include acrylonitrile; α-halogenoacrylonitriles such as α-chloroacrylonitrile and α-bromoacrylonitrile; and α-alkylacrylonitriles such as methacrylonitrile and α-ethylacrylonitrile. These nitrile group-containing monomer units may be used individually or as a combination of two or more types.

Of these nitrile group-containing monomers, acrylonitrile is preferable from a viewpoint of even further increasing adhesiveness of a battery member that includes a functional layer to another battery member.

The proportion constituted by a nitrile group-containing monomer unit included in the polymer forming the core portion among all monomer units included in the particulate polymer, when all monomer units included in the particulate polymer are taken to be 100.0 mass%, is preferably 5.0 mass% or more, more preferably 10.0 mass% or more, and particularly preferably 14.0 mass% or more, and is preferably 25.0 mass% or less, and more preferably 20.0 mass% or less. When the proportion constituted by a nitrile group-containing monomer unit included in the polymer forming the core portion among all monomer units included in the particulate polymer is not less than any of the lower limits set forth above, the glass-transition temperature of the polymer forming the core portion can be lowered even better, which makes it possible to further increase deformability of the polymer during pressing and to even further increase adhesiveness of a battery member that includes a functional layer to another battery member after immersion in electrolyte solution. On the other hand, when the proportion constituted by a nitrile group-containing monomer unit included in the polymer forming the core portion among all monomer units included in the particulate polymer is not more than any of the upper limits set forth above, the degree of swelling in electrolyte solution of the polymer forming the core portion can inhibited from increasing excessively, good adhesiveness of a battery member that includes a functional layer to another battery member after immersion in electrolyte solution can be maintained, and sufficiently good high-temperature cycle characteristics of a secondary battery can be ensured.

[Cross-linkable monomer unit]

A cross-linkable monomer unit is a repeating unit that is derived from a cross-linkable monomer. The cross-linkable monomer is a monomer that can form a cross-linked structure when polymerized. When the polymer forming the core portion includes a cross-linkable monomer unit, the degree of swelling in electrolyte solution of the polymer forming the core portion can be reduced well, which makes it possible to further increase adhesiveness of a battery member that includes a functional layer to another battery member after immersion in electrolyte solution and to enhance high-temperature cycle characteristics of a secondary battery.

Examples of cross-linkable monomers include monomers that include at least two reactive groups per one molecule.

More specifically, a polyfunctional ethylenically unsaturated carboxylic acid ester monomer that includes at least two ethylenically unsaturated bonds can be used as a cross-linkable monomer.

Examples of difunctional ethylenically unsaturated carboxylic acid ester monomers including two ethylenically unsaturated bonds in a molecule include allyl acrylate, allyl methacrylate, ethylene diacrylate, ethylene dimethacrylate, 2-hydroxy-3-acryloyloxypropyl methacrylate, polyethylene glycol diacrylate, propoxylated ethoxylated bisphenol A diacrylate, ethoxylated bisphenol A diacrylate, 9,9-bis[4-(2-acryloyloxyethoxy)phenyl]fluorene, propoxylated bisphenol A diacrylate, tricyclodecane dimethanol diacrylate, 1,10-decanediol diacrylate, 1,6-hexanediol diacrylate, 1,9-nonanediol diacrylate, polypropylene glycol diacrylate, polypropylene glycol dimethacrylate, polytetramethylene glycol diacrylate, ethylene glycol dimethacrylate, diethylene glycol dimethacrylate, polyethylene glycol dimethacrylate, ethoxylated bisphenol A dimethacrylate, tricyclodecane dimethanol dimethacrylate, 1,10-decanediol dimethacrylate, 1,6-hexanediol dimethacrylate, 1,9-nonanediol dimethacrylate, neopentyl glycol dimethacrylate, ethoxylated polypropylene glycol dimethacrylate, and glycerin dimethacrylate.

Examples of trifunctional ethylenically unsaturated carboxylic acid ester monomers including three ethylenically unsaturated bonds in a molecule include ethoxylated isocyanuric acid triacrylate, ε-caprolactone-modified tris(2-acryloxyethyl) isocyanurate, ethoxylated glycerin triacrylate, pentaerythritol triacrylate, trimethylolpropane triacrylate, and trimethylolpropane trimethacrylate.

Examples of ethylenically unsaturated carboxylic acid ester monomers having a functionality of four or higher that include four or more ethylenically unsaturated bonds in a molecule include di(trimethylolpropane) tetraacrylate, ethoxylated pentaerythritol tetraacrylate, pentaerythritol tetraacrylate, dipentaerythritol polyacrylate, and dipentaerythritol hexaacrylate.

Of these cross-linkable monomers, allyl methacrylate is preferable from a viewpoint of even further increasing adhesiveness of a battery member that includes a functional layer to another battery member after immersion in electrolyte solution and also further enhancing high-temperature cycle characteristics of a secondary battery.

The proportion constituted by a cross-linkable monomer unit included in the polymer forming the core portion among all monomer units included in the particulate polymer, when all monomer units included in the particulate polymer are taken to be 100.0 mass%, is preferably 0.1 mass% or more, and more preferably 0.4 mass% or more, and is preferably 2.0 mass% or less, and more preferably 1.0 mass% or less. When the proportion constituted by a cross-linkable monomer unit included in the polymer forming the core portion among all monomer units included in the particulate polymer is not less than any of the lower limits set forth above, the degree of swelling in electrolyte solution of the polymer forming the core portion can be lowered even better, which makes it possible to even further increase adhesiveness of a battery member that includes a functional layer to another battery member after immersion in electrolyte solution and to further enhance high-temperature cycle characteristics of a secondary battery. On the other hand, when the proportion constituted by a cross-linkable monomer unit included in the polymer forming the core portion among all monomer units included in the particulate polymer is not more than any of the upper limits set forth above, strength of the polymer forming the core portion can be inhibited from increasing excessively, good deformability of the polymer during pressing can be maintained, and sufficiently high adhesiveness of a battery member that includes a functional layer to another battery member after immersion in electrolyte solution can be ensured.

<<Shell portion>>

A polymer forming the shell portion of the particulate polymer can include known monomer units without any specific limitations and preferably includes an aromatic vinyl monomer unit, a nitrile group-containing monomer unit, an acidic group-containing monomer unit, and/or the like, for example.
Note that the polymer forming the shell portion is normally a polymer having a different chemical composition from the above-described polymer forming the core portion.

[Aromatic vinyl monomer unit]

An aromatic vinyl monomer unit is a repeating unit that is derived from an aromatic vinyl monomer. When the polymer forming the shell includes an aromatic vinyl monomer unit, the glass-transition temperature of the polymer forming the shell portion can be raised well and blocking resistance of a battery member that includes a functional layer can be further increased while also lowering the degree of swelling in electrolyte solution of the polymer well and enhancing high-temperature cycle characteristics of a secondary battery.
Examples of aromatic vinyl monomers include, but are not specifically limited to, styrene, $\alpha$-methylstyrene, vinyltoluene, and divinylbenzene. Note that one of these aromatic vinyl monomers may be used individually, or two or more of these aromatic vinyl monomers may be used in combination in a freely selected ratio.
Of these aromatic vinyl monomers, styrene is preferable from a viewpoint of even further increasing blocking resistance of a battery member that includes a functional layer and further enhancing high-temperature cycle characteristics of a secondary battery.
The proportion constituted by an aromatic vinyl monomer unit included in the polymer forming the shell portion among all monomer units included in the particulate polymer, when all monomer units included in the particulate polymer are taken to be 100.0 mass%, is preferably 10.0 mass% or more, more preferably 20.0 mass% or more, and particularly preferably 28.2 mass% or more, and is preferably 40.0 mass% or less. When the proportion constituted by an aromatic vinyl monomer unit included in the polymer forming the shell portion among all monomer units included in the particulate polymer is not less than any of the lower limits set forth above, the glass-transition temperature of the polymer forming the shell portion can be raised even better and blocking resistance of a battery member that includes a functional layer can be even further increased while also lowering the degree of swelling in electrolyte solution of the polymer well and further enhancing high-temperature cycle characteristics of a secondary battery. On the other hand, when the proportion constituted by an aromatic vinyl monomer unit included in the polymer forming the shell portion among all monomer units included in the particulate polymer is not more than the upper limit set forth above, the glass-transition temperature of the polymer forming the shell portion can be inhibited from rising excessively, good deformability of the polymer during pressing can be maintained, and sufficiently high adhesiveness of a battery member that includes a functional layer to another battery member after immersion in electrolyte solution can be ensured.

[Nitrile group-containing monomer unit]

A nitrile group-containing monomer unit is a repeating unit that is derived from a nitrile group-containing monomer as previously described in the "Core portion" section. When the polymer forming the shell portion includes a nitrile group-containing monomer unit, blocking resistance of a battery member that includes a functional layer can be further increased.
Any of the nitrile group-containing monomers previously described in the "Core portion" section can be used as a nitrile group-containing monomer. Of these nitrile group-containing monomers, acrylonitrile is preferable from a viewpoint of even further increasing blocking resistance of a battery member that includes a functional layer.

The proportion constituted by a nitrile group-containing monomer unit included in the polymer forming the shell portion among all monomer units included in the particulate polymer, when all monomer units included in the particulate polymer are taken to be 100.0 mass%, is preferably 0.1 mass% or more, more preferably 0.5 mass% or more, and particularly preferably 1.5 mass% or more, and is preferably 5.0 mass% or less, and more preferably 3.0 mass% or less. When the proportion constituted by a nitrile group-containing monomer unit included in the polymer forming the shell portion among all monomer units included in the particulate polymer is not less than any of the lower limits set forth above, blocking resistance of a battery member that includes a functional layer can be even further increased. On the other hand, when the proportion constituted by a nitrile group-containing monomer unit included in the polymer forming the shell portion among all monomer units included in the particulate polymer is not more than any of the upper limits set forth above, the degree of swelling in electrolyte solution of the polymer forming the shell portion can inhibited from increasing excessively, and sufficiently high adhesiveness of a battery member that includes a functional layer to another battery member after immersion in electrolyte solution can be ensured.

[Acidic group-containing monomer unit]

An acidic group-containing monomer unit is a repeating unit that is derived from an acidic group-containing monomer as previously described in the "Core portion" section. When the polymer forming the shell portion includes an acidic group-containing monomer unit, polymerization stability during formation of the polymer forming the shell portion can be increased, and the formation of aggregates can be inhibited well.

Any of the acidic group-containing monomers previously described in the "Core portion" section can be used as an acidic group-containing monomer. Of these acidic group-containing monomers, methacrylic acid is preferable from a viewpoint of further increasing polymerization stability in formation of the polymer forming the shell portion.

The proportion constituted by an acidic group-containing monomer unit included in the polymer forming the shell portion among all monomer units included in the particulate polymer, when all monomer units included in the particulate polymer are taken to be 100.0 mass%, is preferably 0.1 mass% or more, and more preferably 0.3 mass% or more, and is preferably 2.0 mass% or less, and more preferably 1.0 mass% or less. When the proportion constituted by an acidic group-containing monomer unit included in the polymer forming the shell portion among all monomer units included in the particulate polymer is not less than any of the lower limits set forth above, polymerization stability in formation of the polymer forming the shell portion can be further increased, and formation of aggregates can be inhibited even better. On the other hand, when the proportion constituted by an acidic group-containing monomer unit included in the polymer forming the shell portion among all monomer units included in the particulate polymer is not more than any of the upper limits set forth above, the water content of the polymer forming the shell portion can be inhibited from increasing excessively, and sufficiently good high-temperature cycle characteristics of a secondary battery can be ensured.

«Mass ratio of core portion/shell portion»

A mass ratio of the core portion relative to the shell portion (core portion/shell portion) in the particulate polymer is preferably 60/40 or more, and more preferably 70/30 or more, and is preferably 99/1 or less, more preferably 85/15 or less, and particularly preferably 80/20 or less. When the mass ratio of the core portion relative to the shell portion (core portion/shell portion) in the particulate polymer is not less than any of the lower limits set forth above, adhesiveness of a battery member that includes a functional layer to another battery member after immersion in electrolyte solution can be further increased. On the other hand, when the mass ratio of the core portion relative to the shell portion (core portion/shell portion) in the particulate polymer is not more than any of the upper limits set forth above, blocking resistance of a battery member that includes a functional layer can be further increased, and high-temperature cycle characteristics of a secondary battery can be enhanced.

«Ratio of coverage»

The average proportion of the outer surface of the core portion that is covered by the shell portion (ratio of coverage) in the particulate polymer is preferably 10% or more, more preferably 40% or more, and particularly preferably 55% or more, and is preferably 99% or less, more preferably 95% or less, and particularly preferably 85% or less. When the average proportion of the outer surface of the core portion that is covered by the shell portion is kept within any of the specific ranges set forth above, it is possible to cause a battery member that includes a functional layer to have an even better balance of blocking resistance and adhesiveness to another battery member after immersion in electrolyte solution.

Note that the ratio of coverage described above can be measured from the results of observation of cross-sectional structure of the particulate polymer. Specifically, the ratio of coverage can be measured by the following method.

First, the particulate polymer is sufficiently dispersed in epoxy resin that is curable at normal temperature and then embedding is performed to produce a block piece containing core-shell particles. A thin slice of 80 nm to 200 nm in thickness is then cut from the block piece using a microtome equipped with a diamond blade to prepare a measurement sample. Thereafter, the measurement sample may be stained with ruthenium tetroxide or osmium tetroxide, for example, as necessary.

Next, the measurement sample is set in a transmission electron microscope (TEM) and a photograph of the cross-sectional structure of the particulate polymer is taken. The magnification of the electron microscope is preferably set such that the cross-section of one particle of the particulate polymer is in the viewing field, and, more specifically, is preferably a magnification of approximately $\times$ 10,000.

In the imaged cross-sectional structure of the particulate polymer, the length D1 of the circumference corresponding to the outer surface of the core portion and the length D2 of a section where the outer surface of the core portion and the shell portion are in contact are measured. The measured lengths D1 and D2 are then used to calculate the proportion Rc of the outer surface of the core portion that is covered by the shell portion in the particulate polymer by the following formula (1).

$$\text{Covered proportion Rc (\%)} = (D2/D1) \times 100 \qquad (1)$$

The covered proportion Rc is measured for at least 20 core-shell particles, an average value thereof is calculated, and this value is taken to be the average proportion of the outer surface of the core portion that is covered by the shell portion (i.e., the ratio of coverage).

Note that the covered proportion Rc can be calculated manually from the cross-sectional structure or can be calculated using commercially available image analysis software. One example of commercially available image analysis software that can be used is AnalySIS Pro (produced by Olympus Corporation).

«Properties of particulate polymer»

Although no specific limitations are placed on the particulate polymer so long as it has the specific core-shell structure set forth above, the particulate polymer preferably has the following properties, for example.

[Degree of swelling in electrolyte solution]

The degree of swelling in electrolyte solution of the polymer forming the core portion of the particulate polymer is preferably 600 mass% or less, more preferably 550 mass% or less, even more preferably 500 mass% or less, and particularly preferably 400 mass% or less, and is preferably 300 mass% or more. When the degree of swelling in electrolyte solution of the polymer forming the core portion of the particulate polymer is not more than any of the upper limits set forth above, high-temperature cycle characteristics of a secondary battery can be enhanced.

The degree of swelling in electrolyte solution of the polymer forming the shell portion of the particulate polymer is preferably 300 mass% or less, more preferably 200 mass% or less, even more preferably 180 mass% or less, and particularly preferably 170 mass% or less, and is preferably 100 mass% or more. When the degree of swelling in electrolyte solution of the polymer forming the shell portion of the particulate polymer is not more than any of the upper limits set forth above, high-temperature cycle characteristics of a secondary battery can be enhanced.

Note that the degree of swelling in electrolyte solution of polymers forming a core portion and a shell portion of a particulate polymer can be measured by a method described in the EXAMPLES section of the present specification.

[Glass-transition temperature]

The glass-transition temperature of the polymer forming the core portion of the particulate polymer is preferably 20°C or higher, more preferably 30°C or higher, even more preferably 40°C or higher, and particularly preferably 52°C or higher, and is preferably 80°C or lower. When the glass-transition temperature of the polymer forming the core portion of the particulate polymer is not lower than any of the lower limits set forth above, blocking resistance of a battery member that includes a functional layer can be further increased. On the other hand, when the glass-transition temperature of the polymer forming the core portion of the particulate polymer is not higher than the upper limit set forth above, adhesiveness of a battery member that includes a functional layer to another battery member after immersion in electrolyte solution can be further increased.

The glass-transition temperature of the polymer forming the shell portion of the particulate polymer is preferably 40°C or higher, more preferably 60°C or higher, and particularly preferably 80°C or higher, and is preferably 120°C or lower, and more preferably 106°C or lower. When the glass-transition temperature of the polymer forming the shell portion of the particulate polymer is not lower than any of the lower limits set forth above, blocking resistance of a battery member that includes a functional layer can be further increased. On the other hand, when the glass-transition temperature of the polymer forming the shell portion of the particulate polymer is not higher than any of the upper limits set forth above, adhesiveness of a battery member that includes a functional layer to another battery member after immersion in electrolyte solution can be further increased.

Note that the glass-transition temperature of polymers forming a core portion and a shell portion of a particulate polymer can be measured by a method described in the EXAMPLES section of the present specification.

[Volume-average particle diameter D50]

The volume-average particle diameter D50 of the particulate polymer is preferably 0.3 $\mu$m or more, and more preferably 0.5 $\mu$m or more, and is preferably 3.0 $\mu$m or less, more preferably 2.5 $\mu$m or less, and particularly preferably 2.0 $\mu$m or less. When the volume-average particle diameter D50 of the particulate polymer is not less than any of the lower limits set forth above, adhesiveness of a battery member that includes a functional layer to another battery member after immersion in electrolyte solution can be further increased. On the other hand, when the volume-average particle diameter D50 of the particulate polymer is not more than any of the upper limits set forth above, increased electrical resistance due to excessive thickening of a functional layer can be inhibited, and sufficiently good high-temperature cycle characteristics of a secondary battery can be ensured.

«Production method of particulate polymer»

The particulate polymer having the core-shell structure described above can be produced, for example, through stepwise polymerization of monomers for forming the polymer of the core portion and monomers for forming the polymer of the shell portion in which the ratio of these monomers is changed over time. Specifically, the particulate polymer can be produced by continuous, multi-step emulsion polymerization or multi-step suspension polymerization in which a polymer of a preceding step is then covered by a polymer of a subsequent step.

The following describes one example of a case in which the particulate polymer having the core-shell structure described above is obtained by multi-step emulsion polymerization.

In the polymerization, an anionic surfactant such as sodium polyoxyethylene alkyl ether sulfate, sodium dodecylbenzenesulfonate, or sodium dodecyl sulfate, a non-ionic surfactant such as polyoxyethylene nonylphenyl ether or sorbitan monolaurate, or a cationic surfactant such as octadecylamine acetate may be used as an emulsifier in accordance with a standard method. Moreover, a peroxide such as t-butyl peroxy-2-ethylhexanoate, potassium persulfate, ammonium persulfate, or cumene peroxide, or an azo compound such as 2,2'-azobis(2-methyl-N-(2-hydroxyethyl)-propionamide) or 2,2'-azobis(2-amidinopropane) hydrochloride may be used as a polymerization initiator.

The polymerization procedure involves initially mixing monomers for forming the core portion and the emulsifier, and performing emulsion polymerization as one batch to obtain a particulate polymer that forms the core portion. The particulate polymer having the core-shell structure described above can then be obtained by performing polymerization of monomers for forming the shell portion in the presence of the particulate polymer forming the core portion.

In this polymerization, it is preferable that the monomers for forming the polymer of the shell portion are supplied into the polymerization system continuously or divided into a plurality of portions from a viewpoint of partially covering the outer surface of the core portion with the shell portion. As a result of the monomers for forming the polymer of the shell portion being supplied into the polymerization system in portions or continuously, the polymer forming the shell portion can be formed as particles that bond to the core portion such as to form a shell portion that partially covers the core portion.

<Non-conductive porous particles>

The non-conductive porous particles are a component that can provide better injectability of electrolyte solution in production of a secondary battery using a battery member that includes a functional layer and can impart excellent high-temperature cycle characteristics to the secondary battery.

The non-conductive porous particles contain an organic material. No specific limitations are placed on the "organic material" contained in the non-conductive porous particles so long as it is an organic compound.

The non-conductive porous particles normally contain a polymer that has been obtained through polymerization of one monomer or a plurality of monomers as the organic material.

The BET specific surface area of the non-conductive porous particles is preferably 20 m$^2$/cm$^3$ or more, more preferably 25 m$^2$/cm$^3$ or more, even more preferably 30 m$^2$/cm$^3$ or more, and particularly preferably 40 m$^2$/cm$^3$ or more, and is preferably 100 m$^2$/cm$^3$ or less, more preferably 90 m$^2$/cm$^3$ or less, even more preferably 83 m$^2$/cm$^3$ or less, further

preferably 70 m$^2$/cm$^3$ or less, and particularly preferably 62 m$^2$/cm$^3$ or less. When the BET specific surface area of the non-conductive porous particles is not less than any of the lower limits set forth above, injectability of electrolyte solution can be increased in production of a secondary battery using a battery member that includes a functional layer. On the other hand, when the BET specific surface area of the non-conductive porous particles is not more than any of the upper limits set forth above, hygroscopicity of the non-conductive porous particles can be inhibited from excessively increasing, and high-temperature cycle characteristics of a secondary battery can be enhanced.

The volume-average particle diameter D50 of the non-conductive porous particles is preferably 0.3 $\mu$m or more, and more preferably 0.5 $\mu$m or more, and is preferably 2.0 $\mu$m or less, and more preferably 1.0 $\mu$m or less. When the volume-average particle diameter D50 of the non-conductive porous particles is not less than any of the lower limits set forth above, injectability of electrolyte solution can be increased in production of a secondary battery using a battery member that includes a functional layer. On the other hand, when the volume-average particle diameter D50 of the non-conductive porous particles is not more than any of the upper limits set forth above, impairment of binding ability of the previously described particulate polymer by the non-conductive porous particles can be inhibited well, and adhesiveness of a battery member that includes a functional layer to another battery member after immersion in electrolyte solution can be further increased.

The volume-average particle diameter D50 of the non-conductive porous particles is preferably not less than 0.5 times and less than 1 time the volume-average particle diameter D50 of the particulate polymer. When the ratio of the volume-average particle diameter D50 of the non-conductive porous particles relative to the volume-average particle diameter D50 of the particulate polymer is not less than the lower limit set forth above, injectability of electrolyte solution can be increased in production of a secondary battery using a battery member that includes a functional layer. On the other hand, when the ratio of the volume-average particle diameter D50 of the non-conductive porous particles relative to the volume-average particle diameter D50 of the particulate polymer is less than the upper limit set forth above, adhesiveness of a battery member that includes a functional layer to another battery member after immersion in electrolyte solution can be further increased.

So long as the non-conductive porous particles contain an organic material, the non-conductive porous particles may be non-conductive porous particles that only contain an organic material (organic non-conductive porous particles) or non-conductive porous particles that contain an organic material and an inorganic material (organic/inorganic hybrid non-conductive porous particles) without any specific limitations.

Note that the preceding phrase "only contain an organic material" does not exclude the inclusion of trace amounts of components other than the organic material that can become mixed in during production of the non-conductive porous particles, for example.

Moreover, the term "inorganic material" refers to a component other than the organic material, and thus refers to a component other than an organic compound.

«Organic non-conductive porous particles»

No specific limitations are placed on the organic non-conductive porous particles so long as they only contain an organic material. For example, the organic non-conductive porous particles may contain a polymer obtained through polymerization of one monomer or of two or more monomers and may optionally contain other components.

[Polymer]

The polymer that can be contained in the organic non-conductive porous particles is obtained through polymerization of one monomer or of two or more monomers. In other words, the polymer includes repeating units (monomer units) derived from the monomer(s).

Monomers that can be used to produce the polymer are described further below in relation to the production method of the organic non-conductive porous particles.

[Other components]

Examples of other components that can be contained in the organic non-conductive porous particles include a non-polar solvent, an emulsifier, a polymerization initiator, and so forth that are used in the subsequently described production method of the organic non-conductive porous particles.

Note that the organic non-conductive porous particles may contain a trace amount of an inorganic material as another component.

[Properties of organic non-conductive porous particles]

The organic non-conductive porous particles preferably have the following properties, for example.

-Degree of swelling in electrolyte solution-

The degree of swelling in electrolyte solution of the organic non-conductive porous particles is preferably 300 mass% or less, more preferably 200 mass% or less, even more preferably 180 mass% or less, and particularly preferably 160 mass% or less, and is preferably 100 mass% or more. When the degree of swelling in electrolyte solution of the organic non-conductive porous particles is not more than any of the upper limits set forth above, high-temperature cycle characteristics of a secondary battery can be enhanced.

-Glass-transition temperature-

The glass-transition temperature of the organic non-conductive porous particles is preferably 40°C or higher, more preferably 60°C or higher, even more preferably 80°C or higher, and particularly preferably 100°C or higher, and is preferably 200°C or lower. When the glass-transition temperature of the organic non-conductive porous particles is not lower than any of the lower limits set forth above, blocking resistance of a battery member that includes a functional layer can be further increased.

[Production method of organic non-conductive porous particles]

Examples of methods by which the organic non-conductive porous particles can be produced include, but are not specifically limited to, (1) a method in which void forming treatment is performed using seed particles formed of a polymer and (2) a method in which a non-polar solvent is removed from precursor particles that contain a polymer and a non-polar solvent. The use of production method (2) is preferable from a viewpoint of increasing injectability in production of a secondary battery using a battery member that includes a functional layer and enhancing high-temperature cycle characteristics of the secondary battery.

-Production method (1)-

In more detail, production method (1) includes a step of polymerizing a monomer mixture containing one monomer or containing two or more monomers to obtain seed particles and a void forming treatment step of using the obtained seed particles to form voids and pores (pores linking between the particle surface and voids) inside the particles.
The method by which the seed particles are produced and the method by which void forming treatment is performed using the seed particles can, more specifically, be a method described in WO2013/147006A1.

-Production method (2)-

In more detail, production method (2) includes a step of performing miniemulsion polymerization of monomer in the presence of a non-polar solvent in water to obtain precursor particles containing a polymer and the non-polar solvent (precursor particle production step) and a step of removing the non-polar solvent from the precursor particles (non-polar solvent removal step).

--Precursor particle production step--

In the precursor particle production step, miniemulsion polymerization of monomer is performed in the presence of a non-polar solvent in water to obtain precursor particles containing a polymer and a non-polar solvent.
By performing miniemulsion polymerization of monomer in the presence of a non-polar solvent in water in the precursor particle production step in this manner, droplets containing the monomer and the non-polar solvent are formed, and then a polymer is formed through polymerization of the monomer in the droplets, which enables efficient acquisition of precursor particles containing the polymer and the non-polar solvent.
The monomer is not specifically limited, and an aromatic vinyl monomer or like such as previously described in the "Particulate polymer" section may be used, for example. In particular, the use of divinylbenzene is preferable from a viewpoint of keeping the degree of swelling in electrolyte solution and the glass-transition temperature of the organic non-conductive porous particles within any of the specific ranges set forth above.
The non-polar solvent can be a low boiling point hydrocarbon solvent such as cyclohexane, toluene, or xylene, for example, that is selected in accordance with the properties of the used monomer and so forth.

A mass ratio of the used amount of the non-polar solvent relative to the used amount of the monomer (non-polar solvent/monomer) is preferably 30/70 or more, and more preferably 40/60 or more, and is preferably 65/35 or less, and more preferably 60/40 or less. When the mass ratio of the used amount of the non-polar solvent relative to the used amount of the monomer (non-polar solvent/monomer) is not less than any of the lower limits set forth above, the number of pores in the obtained organic non-conductive porous particles can be increased, the BET specific surface area of the organic non-conductive porous particles can be suitably increased, and injectability of electrolyte solution can be increased in production of a secondary battery using a battery member that includes a functional layer. On the other hand, when the mass ratio of the used amount of the non-polar solvent relative to the used amount of the monomer (non-polar solvent/monomer) is not more than any of the upper limits set forth above, it is possible to inhibit the number of pores in the obtained organic non-conductive porous particles becoming excessively large, the BET specific surface area of the organic non-conductive porous particles increasing excessively, and hygroscopicity of the organic non-conductive porous particles increasing excessively, and it is also possible to enhance high-temperature cycle characteristics of a secondary battery.

A hydrophobe is preferably used in addition to the components described above in the precursor particle production step. The hydrophobe is a hydrophobic component that enables good inhibition of enlargement of droplets of the monomer and the non-polar solvent due to Ostwald ripening during miniemulsion polymerization and can increase particle stability of the droplets. Therefore, the use of a hydrophobe in the precursor particle production step makes it easier to keep the volume-average particle diameter D50 of the obtained organic non-conductive porous particles within any of specific ranges set forth above.

Specific examples of hydrophobes that can be used include aliphatic compounds having a carbon number of 8 or more such as hexadecane; monohydric alcohols having a carbon number of 8 or more such as cetyl alcohol (1-hexadecanol); chlorobenzene; dodecyl mercaptan; and olive oil. Of these hydrophobes, hexadecane is preferable from a viewpoint of further increasing particle stability of droplets.

A mass ratio of the used amount of the hydrophobe relative to the total used amount of the monomer and the non-polar solvent (hydrophobe/monomer + non-polar solvent) is preferably 2/98 or more, more preferably 3/97 or more, and even more preferably 5/95 or more, and is preferably 20/80 or less, and more preferably 10/90 or less. When the mass ratio of the used amount of the hydrophobe relative to the total used amount of the monomer and the non-polar solvent (hydrophobe/monomer + non-polar solvent) is not less than any of the lower limits set forth above, the volume-average particle diameter D50 of the organic non-conductive porous particles can be suitably reduced such that it is possible to inhibit impairment of adhering ability of the previously described particulate polymer by the organic non-conductive porous particles and to further increase adhesiveness of a battery member that includes a functional layer to another battery member after immersion in electrolyte solution. On the other hand, when the mass ratio of the used amount of the hydrophobe relative to the total used amount of the monomer and the non-polar solvent (hydrophobe/monomer + non-polar solvent) is not more than any of the upper limits set forth above, impairment of the polymerization reaction by the hydrophobe can be inhibited.

Note that additives such as an emulsifier, a dispersion stabilizer, a polymerization initiator, and a polymerization aid can be used in the precursor particle production step. The emulsifier, dispersion stabilizer, polymerization initiator, and polymerization aid can be typically used examples thereof and the amounts thereof can also be the same as typically used.

In the precursor particle production step, emulsion polymerization is normally performed using a monomer mixture that further contains water in addition to the components described above.

The solid content concentration of the monomer mixture is preferably not less than 2 mass% and not more than 15 mass% from a viewpoint of performing miniemulsion polymerization well. The solid content concentration of the monomer mixture can be kept within the specific range set forth above by appropriately adjusting the used amount of water.

The method by which droplets of the monomer mixture are formed in water in the miniemulsion polymerization is not specifically limited and can be a method using a known dispersing device such as an ultrasonic disperser.

Moreover, conditions such as temperature during the miniemulsion polymerization can be freely set within ranges such that the desired effects are obtained.

Both the polymer and the non-polar solvent are present inside and at the outer surface of the precursor particles obtained as described above. Moreover, it is preferable that the both the polymer and the non-polar solvent are present without being non-uniformly distributed inside and at the outer surface of the precursor particles.

Note that the polymer and the non-polar solvent may be miscible or immiscible with each other at the inside and the outer surface of the precursor particles.

--Non-polar solvent removal step--

In the non-polar solvent removal step, the non-polar solvent is removed from the precursor particles to obtain organic non-conductive porous particles.

By removing the non-polar solvent from the precursor particles in the non-polar solvent removal step, parts where the non-polar solvent was present inside and at the outer surface of the precursor particles become hollow, which enables good production of organic non-conductive porous particles having a large number of pores inside and at the outer surface thereof.

It should be noted that it is not essential to completely remove the non-polar solvent from the precursor particles in the non-polar solvent removal step, and a trace amount of the non-polar solvent may be contained in the organic non-conductive porous particles to the extent that the desired effects are obtained.

A method using a known device such as an evaporator can be adopted as the method by which the non-polar solvent is removed without any specific limitations.

<<Organic/inorganic hybrid non-conductive porous particles>>

The organic/inorganic hybrid non-conductive porous particles are normally particles in which an organic material and an inorganic material are intermingled (i.e., adhered or mixed).

Both the organic material and the inorganic material are normally present inside and at the outer surface of the organic/inorganic hybrid non-conductive porous particles. Moreover, both the organic material and the inorganic material are preferably present without being non-uniformly distributed inside and at the outer surface of the organic/inorganic hybrid non-conductive porous particles.

Although no specific limitations are placed on the organic/inorganic hybrid non-conductive porous particles so long as the organic/inorganic hybrid non-conductive porous particles contain an organic material and an inorganic material, the organic/inorganic hybrid non-conductive porous particles normally contain a polymer that has been obtained through polymerization of one monomer or of two or more monomers as the organic material and particles that are formed of an inorganic material (inorganic particles) as the inorganic material, and optionally contain other components besides the polymer and the inorganic particles.

[Polymer]

No specific limitations are placed on the polymer contained in the organic/inorganic hybrid non-conductive porous particles so long as it is a polymer obtained through polymerization of one monomer or of two or more monomers. For example, a fluoropolymer (polymer including mainly a fluorine-containing monomer unit) such as polyvinylidene fluoride (PVdF); an aromatic vinyl/aliphatic conjugated diene copolymer (polymer including mainly an aromatic vinyl monomer unit and an aliphatic conjugated diene monomer unit) such as styrene-isoprene copolymer (SIS) or styrene-butadiene copolymer (SBR), or a hydrogenated product thereof; an aliphatic conjugated diene/acrylonitrile copolymer such as butadiene-acrylonitrile copolymer (NBR), or a hydrogenated product thereof; a polymer including a (meth)acrylic acid ester monomer unit (acrylic polymer); a polyvinyl alcohol polymer such as polyvinyl alcohol (PVA); or the like can be used depending on the location where a functional layer is to be provided. In particular, the use of an aromatic vinyl/aliphatic conjugated diene copolymer such as SIS or SBR or an acrylic polymer is preferable from a viewpoint of binding capacity between the inorganic particles, with the use of SIS being more preferable.

Known monomers can be used as monomers that can form the various monomer units described above. Examples of (meth)acrylic acid ester monomers that can form a (meth)acrylic acid ester monomer unit include the same monomers as can be used to produce the polymer forming the core portion of the particulate polymer. Note that when a polymer is said to "mainly include" one type or a plurality of types of monomer units in the present disclosure, this means that "the proportional content of the one type of monomer unit or the total proportional content of the plurality of types of monomer units is more than 50 mass% when the amount of all monomer units included in the polymer is taken to be 100 mass%".

[Inorganic particles]

The inorganic particles are not specifically limited and may, for example, be particles of an oxide such as aluminum oxide (alumina), hydrous aluminum oxide (boehmite (AlOOH) or gibbsite (Al(OH)$_3$)), silicon oxide, magnesium oxide (magnesia), calcium oxide, titanium oxide (titania), barium titanate (BaTiO$_3$), ZrO, or alumina-silica complex oxide; particles of a nitride such as aluminum nitride or boron nitride; particles of covalently bonded crystals such as silicon or diamond; particles of sparingly soluble ionic crystals such as barium sulfate, calcium fluoride, barium fluoride, or calcium carbonate; fine particles of clay such as talc or montmorillonite; or the like. Of these inorganic particles, titanium oxide particles and aluminum oxide (alumina) particles are preferable, and titanium oxide particles are more preferable.

These inorganic particles may be subjected to element substitution, surface treatment, solid solution treatment, or the like as necessary. In particular, it is preferable that the inorganic particles are subjected to surface hydrophobization treatment from a viewpoint of increasing binding capacity with respect to the organic material.

The volume-average particle diameter D50 of the inorganic particles is preferably 0.05 $\mu$m or more, more preferably 0.08 $\mu$m or more, and particularly preferably 0.10 $\mu$m or more, and is preferably 0.50 $\mu$m or less, more preferably 0.40 $\mu$m or less, and particularly preferably 0.30 $\mu$m or less. When the volume-average particle diameter D50 of the inorganic particles is not less than any of the lower limits set forth above, the volume-average particle diameter D50 of the obtained non-conductive porous particles can be suitably increased, and injectability of electrolyte solution can be increased in production of a secondary battery using a battery member that includes a functional layer. On the other hand, when the volume-average particle diameter D50 of the inorganic particles is not more than any of the upper limits set forth above, the specific surface area of the obtained non-conductive porous particles can be suitably increased, and injectability of electrolyte solution can be increased in production of a secondary battery using a battery member that includes a functional layer.

[Other components]

Examples of other components that can be contained in the organic/inorganic hybrid non-conductive porous particles include a non-polar solvent, an emulsifier, and so forth that are used in the subsequently described production method of the organic/inorganic hybrid non-conductive porous particles.

[Production method of organic/inorganic hybrid non-conductive porous particles]

Although no specific limitations are placed on the method by which the organic/inorganic hybrid non-conductive porous particles are produced, one example of a production method that can be used includes a step of emulsifying a mixture containing an organic material, an inorganic material, and a non-polar solvent in water to obtain precursor particles (precursor particle production step) and a step of removing the non-polar solvent from the precursor particles (non-polar solvent removal step).

[Precursor particle production step]

In the precursor particle production step, a mixture that contains an organic material, an inorganic material, and a non-polar solvent is emulsified in water to obtain precursor particles.

The organic material may, for example, be a polymer such as previously described. The inorganic material may, for example, be inorganic particles such as previously described. The non-polar solvent may, for example, be any of the non-polar solvents that were previously described in the "Production method of organic non-conductive porous particles" section.

A known mixing method can be used in production of the mixture containing the organic material, the inorganic material, and the non-polar solvent. For example, although the organic material and the inorganic material may be added to the non-polar solvent at the same time and then be mixed therewith, it is preferable from a viewpoint of uniformly mixing the components that an inorganic particle dispersion liquid of the inorganic material dispersed in the non-polar solvent is produced in advance and that the organic material is subsequently mixed with the inorganic particle dispersion liquid.

Production of the inorganic particle dispersion liquid in which the inorganic material is dispersed in the non-polar solvent and mixing of the organic material with the inorganic particle dispersion liquid are preferably performed using a known device such as an ultrasonic disperser from a viewpoint of dispersing or mixing the components well.

Note that a dispersant such as acetoalkoxyaluminum diisopropylate is preferably used in production of the inorganic particle dispersion liquid from a viewpoint of dispersing the inorganic particles well in the non-polar solvent.

Moreover, in mixing of the organic material with the inorganic particle dispersion liquid, although just the organic material, by itself, may be mixed with the inorganic particle dispersion liquid, it is preferable from a viewpoint of efficiently mixing the organic material that the organic material is dissolved or dispersed in the non-polar solvent in advance and is then mixed with the inorganic particle dispersion liquid.

A volume ratio of the used amount of the inorganic material relative to the used amount of the organic material (dry state) (inorganic material/organic material) is preferably 1/1 or more, more preferably 3/2 or more, and particularly preferably 7/3 or more, and is preferably 9/1 or less, and more preferably less than 9/1. When the volume ratio of the used amount of the inorganic material relative to the used amount of the organic material (dry state) (inorganic material/organic material) is not less than any of the lower limits set forth above, the BET specific surface area of the obtained organic/inorganic hybrid non-conductive porous particles can be appropriately increased, and injectability of electrolyte solution can be increased in production of a secondary battery using a battery member that includes a functional layer. On the other hand, when the volume ratio of the used amount of the inorganic material relative to the used amount of the organic material (dry state) (inorganic material/organic material) is not more than any of the upper limits set forth above, the occurrence of particle fragmentation of the obtained organic/inorganic hybrid non-conductive porous particles can be inhibited well, and sufficiently good electrolyte solution injectability in production of a secondary battery using a battery member that includes a functional layer and high-temperature cycle characteristics of the secondary battery can be ensured.

The method by which the mixture containing the organic material, the inorganic material, and the non-polar solvent described above is emulsified in water is not specifically limited and can be an emulsification method using a known dispersing device such as an ultrasonic disperser.

The organic material, the inorganic material, and the non-polar solvent are all present inside and at the outer surface of the precursor particles obtained as described above. Moreover, it is preferable that the organic material, the inorganic material, and the non-polar solvent are all present without being non-uniformly distributed inside and at the outer surface of the precursor particles.

Note that the organic material and the non-polar solvent may be miscible or immiscible with each other at the inside and the outer surface of the precursor particles.

[Non-polar solvent removal step]

In the non-polar solvent removal step, the non-polar solvent is removed from the precursor particles to obtain organic/inorganic hybrid non-conductive porous particles.

By removing the non-polar solvent from the precursor particles in the non-polar solvent removal step, the inorganic particles and the organic material inside and at the outer surface of the precursor particles bind together, enabling good production of organic/inorganic hybrid non-conductive porous particles having a large number of pores.

It should be noted that it is not essential to completely remove the non-polar solvent from the precursor particles in the non-polar solvent removal step, and a trace amount of the non-polar solvent may be contained in the organic/inorganic hybrid non-conductive porous particles to the extent that the desired effects are obtained.

A method using a known device such as an evaporator can be adopted without any specific limitations as the method by which the non-polar solvent is removed.

<Volume ratio (non-conductive porous particles/particulate polymer)>

A volume ratio of the non-conductive porous particles relative to the particulate polymer (non-conductive porous particles/particulate polymer) in the presently disclosed composition for a non-aqueous secondary battery functional layer is preferably 20/100 or more, more preferably 25/100 or more, even more preferably 30/100 or more, and particularly preferably 40/100 or more, and is preferably less than 100/100, more preferably less than 90/100, and particularly preferably less than 80/100. When the volume ratio of the non-conductive porous particles relative to the particulate polymer (non-conductive porous particles/particulate polymer) is not less than any of the lower limits set forth above, injectability of electrolyte solution can be increased in production of a secondary battery that includes a functional layer. On the other hand, when the volume ratio of the non-conductive porous particles relative to the particulate polymer (non-conductive porous particles/particulate polymer) is less than any of the upper limits set forth above, adhesiveness of a battery member that includes a functional layer to another battery member after immersion in electrolyte solution can be further increased, and high-temperature cycle characteristics of a secondary battery can be enhanced.

Note that the volumes of the particulate polymer and the non-conductive porous particles referred to above are the volumes thereof in water.

<Other components>

Examples of components other than the particulate polymer that can be contained in the presently disclosed composition for a non-aqueous secondary battery functional layer include, but are not specifically limited to, binders and known additives.

For example, any of the polymers previously described as organic materials that can be contained in the organic/inorganic hybrid non-conductive porous particles can be used as a binder.

Components such as non-conductive particles other than the previously described non-conductive porous particles, surface tension modifiers, dispersants, viscosity modifiers, reinforcing materials, additives for electrolyte solution, and wetting agents, for example, can be contained as known additives without any specific limitations. These components may be commonly known examples thereof, such as non-conductive particles described in JP2015-041606A, surface tension modifiers, dispersants, viscosity modifiers, reinforcing materials, and additives for electrolyte solution described in WO2012/115096A1, and wetting agents described in WO2016/017066A1. Note that one of these components may be used individually, or two or more of these components may be used in combination in a freely selected ratio.

<Production method of composition for non-aqueous secondary battery functional layer>

So long as the presently disclosed composition for a non-aqueous secondary battery functional layer contains the particulate polymer having the specific core-shell structure described above and the non-conductive porous particles, the presently disclosed composition for a non-aqueous secondary battery functional layer can be produced, without any specific limitations, by stirring and mixing the particulate polymer, the non-conductive porous particles, and the other components described above, in the presence of a dispersion medium such as water, for example. Note that in a case in which the composition for a non-aqueous secondary battery functional layer is produced using a dispersion liquid of the particulate polymer and a dispersion liquid of the non-conductive porous particles, liquid content of these dispersion liquids can be used as the dispersion medium of the composition for a non-aqueous secondary battery functional layer.

The stirring can be performed by a known method without any specific limitations. Specifically, the composition for a non-aqueous secondary battery functional layer can be produced in the form of a slurry by mixing the above-described components and the dispersion medium using a typical stirring vessel, ball mill, sand mill, bead mill, pigment disperser, ultrasonic disperser, grinding machine, homogenizer, planetary mixer, FILMIX, or the like. Mixing of the components and the dispersion medium can normally be performed in a temperature range of from room temperature to 80°C for a period of from 10 minutes to several hours.

(Functional layer for non-aqueous secondary battery)

The presently disclosed functional layer for a non-aqueous secondary battery is a layer that is formed from the composition for a non-aqueous secondary battery functional layer set forth above. The presently disclosed functional layer for a non-aqueous secondary battery can be formed, for example, by applying the above-described composition for a functional layer onto the surface of a suitable substrate to form a coating film, and then drying the coating film that is formed. In other words, the presently disclosed functional layer for a non-aqueous secondary battery is formed of a dried product of the composition for a non-aqueous secondary battery functional layer set forth above and normally contains a particulate polymer having the specific core-shell structure described above and non-conductive porous particles containing an organic material.

As a result of being formed using the composition for a non-aqueous secondary battery functional layer set forth above, the presently disclosed functional layer for a non-aqueous secondary battery can cause a battery member including the functional layer to have a good balance of blocking resistance and adhesiveness to another battery member after immersion in electrolyte solution.

Note that the presently disclosed functional layer for a non-aqueous secondary battery may be a porous membrane layer for improving heat resistance and strength of a battery member such as a separator or an electrode, may be an adhesive layer for adhering battery members to each other, may be a heat-resistant layer for imparting mainly heat resistance to a battery member, or may be a layer that displays the functionals of both a porous membrane layer and an adhesive layer. In particular, since the presently disclosed non-aqueous secondary battery functional layer has good adhesiveness after immersion in electrolyte solution, the presently disclosed non-aqueous secondary battery functional layer can suitably be used as a functional layer that can display good adhesiveness after immersion in electrolyte solution as the sole function thereof or in combination with another function such as strength improvement or heat resistance.

<Substrate>

No limitations are placed on the substrate onto which the composition for a functional layer is applied. For example, a coating film of the composition for a functional layer may be formed on the surface of a releasable substrate, the coating film may be dried to form a functional layer, and then the releasable substrate may be peeled from the functional layer. The functional layer that is peeled from the releasable substrate in this manner can be used as a free-standing film in formation of a battery member of a secondary battery. Specifically, the functional layer that is peeled from the releasable substrate may be stacked on a separator substrate to form a separator including the functional layer or may be stacked on an electrode substrate to form an electrode including the functional layer.

However, it is preferable that a separator substrate or an electrode substrate is used as the substrate from a viewpoint of raising battery member production efficiency since a step of peeling the functional layer can be omitted.

«Separator substrate»

The separator substrate is not specifically limited and may be a known separator substrate such as an organic separator substrate. The organic separator substrate is a porous member that is made from an organic material. The organic separator substrate may, for example, be a microporous membrane or non-woven fabric containing a polyolefin resin such as polyethylene or polypropylene, or an aromatic polyamide resin, and is preferably a microporous membrane or non-woven fabric made from polyethylene due to the excellent strength thereof. Note that although the separator substrate can have any thickness, the thickness of the separator substrate is preferably not less than 5 $\mu$m and not more than 30 $\mu$m, more preferably not less than 5 $\mu$m and not more than 20 $\mu$m, and particularly preferably not less than 5 $\mu$m and not more than 18 $\mu$m. A separator substrate thickness of 5 $\mu$m or more enables sufficient safety. Moreover, a separator substrate thickness of 30 $\mu$m or less can inhibit reduction of ion conductivity and deterioration of secondary battery output characteristics, and can also inhibit increase of heat shrinkage force of the separator substrate and improve heat resistance.

«Electrode substrate»

The electrode substrate (positive electrode substrate or negative electrode substrate) is not specifically limited and may, for example, be an electrode substrate obtained by forming an electrode mixed material layer on a current collector.

The current collector, an electrode active material (positive electrode active material or negative electrode active material) and an electrode mixed material layer binder (positive electrode mixed material layer binder or negative electrode mixed material layer binder) that are contained in the electrode mixed material layer, and the method by which the electrode mixed material layer is formed on the current collector may be known examples thereof such as any of those described in JP2013-145763A, for example.

<Formation method of functional layer for non-aqueous secondary battery>

Examples of methods by which the functional layer may be formed on a substrate such as the separator substrate or the electrode substrate described above include the following methods.

(1) A method in which the presently disclosed composition for a non-aqueous secondary battery functional layer is applied onto the surface of a separator substrate or an electrode substrate (surface at the electrode mixed material layer side in the case of an electrode substrate; same applies below) and is then dried
(2) A method in which a separator substrate or an electrode substrate is immersed in the presently disclosed composition for a non-aqueous secondary battery functional layer and is then dried
(3) A method in which the presently disclosed composition for a non-aqueous secondary battery functional layer is applied onto a releasable substrate and is dried to produce a functional layer that is then transferred onto the surface of a separator substrate or an electrode substrate

Of these methods, method (1) is particularly preferable since it allows simple control of the thickness of the functional layer. In more detail, method (1) includes a step of applying the composition for a functional layer onto a substrate (application step) and a step of drying the composition for a functional layer that has been applied onto the substrate to form a functional layer (functional layer formation step).

«Application step»

Examples of methods by which the composition for a functional layer can be applied onto the substrate in the application step include, but are not specifically limited to, doctor blading, reverse roll coating, direct roll coating, gravure coating, extrusion coating, and brush coating.

«Functional layer formation step»

The composition for a functional layer on the substrate may be dried by any commonly known method in the functional layer formation step, without any specific limitations. For example, the drying method may be drying by warm, hot, or low-humidity air; drying in a vacuum; or drying by irradiation with infrared light, electron beams, or the like. Although no specific limitations are placed on the drying conditions, the drying temperature is preferably 50°C to 150°C, and the drying time is preferably 3 minutes to 30 minutes.

(Separator for non-aqueous secondary battery)

A feature of the presently disclosed separator for a non-aqueous secondary battery is that it includes the functional layer for a non-aqueous secondary battery set forth above.
Note that the presently disclosed separator for a non-aqueous secondary battery normally includes a separator substrate and a functional layer formed on the substrate, and has the functional layer for a non-aqueous secondary battery set forth above as this functional layer.

Consequently, the presently disclosed separator for a non-aqueous secondary battery can have a good balance of blocking resistance and adhesiveness to an electrode after immersion in electrolyte solution.

The substrate can be the separator substrate that was previously described in the "Functional layer for non-aqueous secondary battery" section.

Note that the presently disclosed separator for a non-aqueous secondary battery may include a constituent element other than the separator substrate and the functional layer set forth above so long as the desired effects are not significantly lost.

Any constituent element that does not correspond to the separator substrate and the functional layer set forth above can be used without any specific limitations as a constituent element other than the separator substrate and the functional layer set forth above, and one example thereof is a heat-resistant layer disposed between the separator substrate and the functional layer set forth above.

Note that in a case in which the presently disclosed separator for a non-aqueous secondary battery includes a layer other than the functional layer set forth above on the separator substrate, it is preferable that the functional layer set forth above constitutes an outermost layer at at least one side in a thickness direction of the presently disclosed separator for a non-aqueous secondary battery, and more preferable that the functional layer set forth above constitutes an outermost layer at both sides in the thickness direction of the presently disclosed separator for a non-aqueous secondary battery.

When the functional layer set forth above constitutes an outermost layer at at least one side in the thickness direction of the presently disclosed separator for a non-aqueous secondary battery, the functional layer set forth above can, at the at least one side of the separator, come into direct contact with a surface at the other side of the separator in a situation in which the separator is wound up, for example, and thus the presently disclosed separator for a non-aqueous secondary battery can display even better blocking resistance.

Moreover, when the functional layer set forth above constitutes an outermost layer at at least one side in the thickness direction of the presently disclosed separator for a non-aqueous secondary battery, the functional layer set forth above can come into direct contact with an electrode (positive electrode or negative electrode) as an outermost layer of the separator in a situation in which the presently disclosed separator for a non-aqueous secondary battery is used to produce a secondary battery, and thus the presently disclosed separator for a non-aqueous secondary battery can display excellent adhesiveness to the electrode after immersion in electrolyte solution.

(Non-aqueous secondary battery)

A feature of the presently disclosed non-aqueous secondary battery is that it includes the separator for a non-aqueous secondary battery set forth above. More specifically, the presently disclosed non-aqueous secondary battery includes a positive electrode, a negative electrode, a separator, and an electrolyte solution, and has the separator for a non-aqueous secondary battery set forth above as the separator. The presently disclosed non-aqueous secondary battery has excellent adhesiveness of a separator to an electrode after immersion in electrolyte solution and high performance as a result of including the separator for a non-aqueous secondary battery set forth above.

<Positive electrode, negative electrode, and separator>

The positive electrode and the negative electrode used in the presently disclosed secondary battery are not specifically limited and may, for example, each be an electrode formed of an electrode substrate such as previously described in the "Functional layer for non-aqueous secondary battery" section.

The separator used in the presently disclosed secondary battery is the presently disclosed separator set forth above.

<Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), methyl ethyl carbonate (MEC), and vinylene carbonate (VC); esters such as $\gamma$-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

<Production method of non-aqueous secondary battery>

The presently disclosed non-aqueous secondary battery can be produced by, for example, overlapping the positive electrode and the negative electrode with the separator in-between, performing rolling, folding, or the like of the resultant laminate as necessary to place the laminate in a battery container, injecting the electrolyte solution into the battery container, and sealing the battery container. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

EXAMPLES

The following provides a more specific description of the present disclosure based on examples. However, the present disclosure is not limited to these examples. In the following description, "parts" and "%" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to measure and evaluate the BET specific surface area of non-conductive porous particles; the degree of swelling in electrolyte solution, glass-transition temperature, and volume-average particle diameter D50 of a particulate polymer and organic non-conductive porous particles; the blocking resistance and adhesiveness to an electrode after immersion in electrolyte solution of a separator; the injectability of electrolyte solution in production of a secondary battery; and the high-temperature cycle characteristics of a secondary battery.

<BET specific surface area of non-conductive porous particles>

The BET specific surface area of non-conductive porous particles was measured by a gas adsorption method using an automatic BET specific surface area analyzer (Macsorb HM model-1208 produced by Mountech Co., Ltd.).

<Degree of swelling in electrolyte solution of particulate polymer and organic non-conductive porous particles>

A water dispersion of a polymer forming a core portion that was obtained in the production process of a particulate polymer having a core-shell structure was prepared as a measurement sample for the core portion of the particulate polymer.

Moreover, a water dispersion containing a polymer forming a shell portion that was produced by performing the same operations as in production of the particulate polymer having the core-shell structure with the exception that a monomer composition for core portion formation was not added and polymerization was not performed at 60°C in production of the particulate polymer having the core-shell structure was prepared as a measurement sample for the shell portion of the particulate polymer.

Furthermore, a water dispersion containing organic non-conductive porous particles was prepared as a measurement sample for the organic non-conductive porous particles.

Next, each of the water dispersions that had been prepared as a measurement sample was loaded into a petri dish made from polytetrafluoroethylene, was dried at a temperature of 25°C for 48 hours, and the resultant powder was hot pressed at 200°C to produce a film of 0.5 mm in thickness. A test specimen was obtained by cutting a 1 cm square from the obtained film. The mass of the test specimen was measured and was taken to be W0. The test specimen was then immersed in electrolyte solution at a temperature of 60°C for 72 hours. Thereafter, the test specimen was removed from the electrolyte solution, electrolyte solution on the surface of the test specimen was wiped off, and the mass W1 of the test specimen after immersion was measured. These masses W0 and W1 were used to calculate the degree of swelling in electrolyte solution S (%) by a formula: $S = (W1/W0) \times 100$.

Note that the electrolyte solution was a solution having $LiPF_6$ of 1 mol/L in concentration as a supporting electrolyte dissolved in a mixed solvent of ethylene carbonate (EC), diethyl carbonate (DEC), and vinylene carbonate (VC) (volume mixing ratio: EC/DEC/VC = 68.5/30/1.5).

<Glass-transition temperature of particulate polymer and organic non-conductive porous particles>

A dried product obtained through drying of a water dispersion of a polymer forming a core portion that was obtained in the production process of a particulate polymer having a core-shell structure was prepared as a measurement sample for the core portion of the particulate polymer.

Moreover, a dried product obtained through drying of a water dispersion containing a polymer forming a shell portion that was produced by performing the same operations as in production of the particulate polymer having the core-shell structure with the exception that a monomer composition for core portion formation was not added and polymerization was not performed at 60°C in production of the particulate polymer having the core-shell structure was prepared as a measurement sample for the shell portion of the particulate polymer.

Furthermore, a dried product obtained through drying of a water dispersion containing organic non-conductive porous particles was prepared as a measurement sample for the organic non-conductive porous particles.

Next, 10 mg of each of the measurement samples was weighed into an aluminum pan, and a differential scanning calorimeter (produced by SII NanoTechnology Inc.; product name: EXSTAR DSC6220) was used to measure a differential scanning calorimetry (DSC) curve for the measurement sample with a measurement temperature range of -100°C to 500°C and a heating rate of 10°C/min at normal temperature and normal humidity, and using an empty aluminum pan as a reference. In the heating process, the glass-transition temperature was determined from an intersection point of a base line directly before a heat absorption peak on the DSC curve at which a derivative signal (DDSC) reached at least 0.05 mW/min/mg and a tangent to the DSC curve at a first inflection point to appear after the heat absorption peak.

<Volume-average particle diameter D50 of particulate polymer and non-conductive porous particles>

A water dispersion for measurement that had been adjusted to a solid content concentration of 15 mass% was prepared for a particulate polymer and for non-conductive porous particles. The water dispersions of these particles were each used to measure a particle diameter distribution with a laser diffraction particle diameter distribution analyzer (produced by Shimadzu Corporation; product name: SALD-3100). In each of the measured particle diameter distributions, the particle diameter at which cumulative volume calculated from a small diameter end of the distribution reached 50% was taken to be the volume-average particle diameter (D50) of the particles.

<Blocking resistance of separator>

A separator produced in each example or comparative example was used to produce a large test specimen by cutting out a square of 5 cm in width by 5 cm in length and a small test specimen by cutting out a square of 4 cm in width by 4 cm in length. Next, a sample (non-pressed sample) was produced by simply overlapping, at normal temperature (23°C), a surface of the large test specimen where a heat-resistant layer and an adhesive layer were included on a separator substrate and a surface of the small test specimen where only an adhesive layer was included on a separator substrate. Separately to the non-pressed sample, a sample (pressed sample) was produced by performing overlapping as described above and then placing the sample under pressure at a temperature of 40°C and a pressure of 10 g/cm². These samples were each left for 24 hours. The adhesion state (blocking state) of the overlapped separators in each of the samples that had been left for 24 hours was visually checked in order to evaluate separator blocking resistance by the following standard.

A: Blocking of separators does not occur in non-pressed sample or pressed sample
B: Blocking of separators does not occur in non-pressed sample; blocking of separators occurs in pressed sample but separators can be peeled apart
C: Blocking of separators does not occur in non-pressed sample; blocking of separators occurs in pressed sample and separators cannot be peeled apart
D: Blocking of separators occurs in both non-pressed sample and pressed sample

<Adhesiveness of separator to electrode after immersion in electrolyte solution>

A separator and a positive electrode produced in each example or comparative example were used to produce a laminate of the separator and the positive electrode by overlapping the separator and the positive electrode such that a surface of the separator where a heat-resistant layer and an adhesive layer were included on a separator substrate and a surface of the positive electrode where a positive electrode mixed material layer was included were in contact.

Moreover, a separator and a negative electrode produced in each example or comparative example were used to produce a laminate of the separator and the negative electrode by overlapping the separator and the negative electrode such that a surface of the separator where an adhesive layer was included on a separator substrate and a surface of the negative electrode where a negative electrode mixed material layer was included were in contact.

Each of the obtained laminates was cut out with a width of 10 mm and was placed inside laminate packing. After injecting electrolyte solution and then sealing the laminate packing, the laminate was left in an immersed state at a temperature of 60°C for 3 days. The electrolyte solution was a solution having $LiPF_6$ dissolved as a supporting electrolyte in a mixed solvent of ethylene carbonate, diethyl carbonate, and vinylene carbonate (volume mixing ratio EC/DEC/VC = 68.5/30/1.5) with a concentration of 1 mol/L relative to the solvent.

Thereafter, the laminate was pressed from above the packing with a temperature of 50°C, a pressure of 1 MPa, and a pressing time of 3 minutes to obtain a test specimen in which the separator and the electrode (positive electrode or negative electrode) were adhered.

The obtained test specimen was removed from the packing, and electrolyte solution attached to the surface thereof was wiped off. Thereafter, the test specimen was placed with a surface at the electrode (positive electrode or negative electrode) side thereof facing downward, and cellophane tape (tape prescribed by JIS Z 1522) was affixed to the surface at the electrode side. Note that the cellophane tape was secured to a horizontal test stage in advance. Next, the stress when the separator was peeled off by pulling one end of the separator vertically upward at a pulling speed of 50 mm/min was measured. This measurement was performed 3 times for test specimens in which a separator and a positive electrode were adhered and 3 times for test specimens in which a separator and a negative electrode were adhered (i.e., 6 times in total), an average value of the stress was determined, and this average value was taken to be the peel strength. The adhesiveness of a separator to an electrode after immersion in electrolyte solution was evaluated by the following standard based on the obtained peel strength. Note that a larger value for the peel strength indicates better adhesiveness of a separator to an electrode after immersion in electrolyte solution.

A: Peel strength of 5.0 N/m or more
B: Peel strength of not less than 3.0 N/m and less than 5.0 N/m
C: Peel strength of not less than 0.5 N/m and less than 3.0 N/m
D: Peel strength of less than 0.5 N/m

<Injectability of electrolyte solution in production of secondary battery>

Electrolyte solution (solvent: ethylene carbonate/diethyl carbonate/vinylene carbonate = 68.5/30/1.5 (volume ratio); electrolyte: $LiPF_6$ of 1 M in concentration) was injected into a pre-injection wound cell lithium ion secondary battery produced in each example such that no air remained. For each example or comparative example, the same operation was repeated multiple times with the exception that the injection time was changed.

The minimum injection time for which spillage of electrolyte solution did not occur during injection was determined, and injectability of electrolyte solution in production of a secondary battery was evaluated by the following standard. Note that a shorter minimum injection time indicates better injectability of electrolyte solution in production of a secondary battery.

A: Minimum injection time of 100 s or less
B: Minimum injection time of more than 100 s and not more than 300 s
C: Minimum injection time of more than 300 s

<High-temperature cycle characteristics of secondary battery>

A lithium ion secondary battery produced in each example was left at rest in a 25°C environment for 24 hours, was subsequently subjected to a charge/discharge operation of charging to 4.35 V with a 0.1C charge rate and discharging to 2.75 V with a 0.1C discharge rate in a 25°C environment, and the initial capacity C0 was measured. Next, 1,000 cycles of the same charge/discharge operation were performed in a 65°C environment, and the capacity C1 after 1,000 cycles was measured.

The capacity maintenance rate $\Delta C$ between before and after cycling (= (C1/C0) $\times$ 100%) was calculated and was evaluated by the following standard. A larger value for the capacity maintenance rate ΔC indicates that the lithium ion secondary battery has better high-temperature cycle characteristics.

A: Capacity maintenance rate ΔC of 85% or more
B: Capacity maintenance rate ΔC of not less than 80% and less than 85%
C: Capacity maintenance rate ΔC of less than 80%

(Example 1-1)

<Production of particulate polymer having core-shell structure>

A reactor including a stirrer was supplied with 100 parts of deionized water and 0.5 parts of ammonium persulfate as a polymerization initiator. The gas phase was purged with nitrogen gas and heating was performed to 60°C. Meanwhile, a monomer composition for core portion formation was obtained in a separate vessel by mixing 50 parts of deionized water, 0.3 parts of sodium dodecylbenzenesulfonate as an emulsifier, 21.3 parts of butyl acrylate (BA) and 31.5 parts of methyl methacrylate (MMA) as (meth)acrylic acid alkyl ester monomers, 2.8 parts of methacrylic acid (MAA) as an acidic group-containing monomer, 14.0 parts of acrylonitrile (AN) as a nitrile group-containing monomer, and 0.4 parts of allyl methacrylate (AMA) as a cross-linkable monomer. The monomer composition for core portion formation was continuously added into the aforementioned reactor over 4 hours to carry out polymerization at 60°C. Polymerization was continued until a polymerization conversion rate of 96% was reached to yield a water dispersion containing a particulate polymer forming a core portion. The water dispersion was then heated to 80°C. A monomer mixture for shell portion formation obtained by mixing 28.2 parts of styrene (ST) as an aromatic vinyl monomer, 1.5 parts of acrylonitrile (AN) as nitrile group-containing monomer, and 0.3 parts of methacrylic acid (MAA) as an acidic group-containing monomer was continuously supplied, over 30 minutes, into the water dispersion containing the particulate polymer forming the core portion that was obtained as described above, and polymerization was continued. The reaction was quenched by cooling at the point at which the polymerization conversion rate reached 96% to yield a water dispersion containing a particulate polymer.

The particulate polymer was confirmed to have a core-shell structure in which a shell portion partially covered the outer surface of a core portion through observation of the cross-sectional structure of the particulate polymer using a transmission electron microscope (TEM).

The volume-average particle diameter D50 of the obtained particulate polymer was measured. Moreover, the degree of swelling in electrolyte solution and glass-transition temperature of each of the core portion and the shell portion of the particulate polymer were measured. The results are shown in Tables 1 and 3.

<Production of organic non-conductive porous particles>

A reactor in which a stirring bar had been placed was charged with 50 parts of divinylbenzene (DVB) as a monomer, 45 parts of cyclohexane (CHX) as a non-polar solvent, 5 parts of hexadecane (HD) as a hydrophobe, 2 parts of sodium dodecylbenzenesulfonate as an emulsifier, 2 parts of di(3,5,5-trimethylhexanoyl) peroxide as a polymerization initiator, and deionized water such that the solid content concentration was 5 mass% to obtain a monomer mixture. Next, an emulsion was obtained by treating the monomer mixture for 15 minutes by an ultrasonic disperser (UP400 produced by Hielscher Ultrasonics GmbH) while cooling the monomer mixture to prevent the temperature thereof from rising. Next, the emulsion was heated to 80°C and polymerization was performed. The reaction was quenched by cooling at the point at which the polymerization conversion rate reached 90%. A rotary evaporator (R-300 produced by BUCHI Labortechnik AG) was used to remove cyclohexane from the liquid present after the reaction to obtain a water dispersion containing organic non-conductive porous particles.

The BET specific surface area, degree of swelling in electrolyte solution, glass-transition temperature, and volume-average particle diameter D50 of the obtained organic non-conductive porous particles were measured. The results are shown in Tables 1 and 3.

<Production of binder for heat-resistant layer>

A reactor including a stirrer was supplied with 70 parts of deionized water, 0.15 parts of sodium lauryl sulfate (EMAL® 2F (EMAL is a registered trademark in Japan, other countries, or both) produced by Kao Corporation) as an emulsifier, and 0.5 parts of ammonium persulfate as a polymerization initiator. The gas phase was purged with nitrogen gas and heating was performed to 60°C.

Meanwhile, a monomer composition was obtained in a separate vessel by mixing 50 parts of deionized water, 0.5 parts of sodium dodecylbenzenesulfonate as a dispersant, 94 parts of butyl acrylate (BA), 2 parts of methacrylic acid (MAA), 2 parts of acrylonitrile (AN), 1 part of allyl methacrylate (AMA), and 1 part of allyl glycidyl ether (AGE). The monomer composition was continuously added into the aforementioned reactor over 4 hours to carry out polymerization. The reaction was carried out at 60°C during this addition. Once this addition was completed, a further 3 hours of stirring was performed at 70°C to complete the reaction and thereby produce a water dispersion containing an acrylic polymer as a binder for a heat-resistant layer. Note that the obtained acrylic polymer had a particulate form, a volume-average particle diameter D50 of 0.36 $\mu$m, and a glass-transition temperature of -40°C.

<Production of slurry composition for heat-resistant layer>

Alumina particles (AKP-3000 produced by Sumitomo Chemical Co., Ltd.; volume-average particle diameter D50 = 0.45 $\mu$m; tetrapod-shaped particles) were prepared as inorganic particles.
Moreover, carboxymethyl cellulose (D1200 produced by Daicel FineChem Ltd.; degree of etherification: 0.8 to 1.0) was prepared as a viscosity modifier. Note that the viscosity of a 1% aqueous solution of the viscosity modifier was 10 mPa·s to 20 mPa·s.
Next, mixing and dispersing were performed with respect to 100 parts of the inorganic particles, 1.5 parts of the viscosity modifier, and deionized water such that the solid content concentration was 40 mass%. In addition, 4 parts (in terms of solid content) of the water dispersion containing the acrylic polymer as a binder for a heat-resistant layer and 0.2 parts of a polyethylene glycol surfactant (SN WET 366 produced by San Nopco Limited) were mixed in order to produce a slurry composition for a heat-resistant layer.

<Production of slurry composition for adhesive layer (composition for functional layer)>

The water dispersion of the organic non-conductive porous particles was added in an amount of 40 parts by volume (in terms of volume of organic non-conductive porous particles) relative to 100 parts by volume (in terms of volume of particulate polymer) of the water dispersion of the particulate polymer having a core-shell structure. In addition, 22 parts (in terms of solid content) of the water dispersion containing the acrylic polymer as a binder for a heat-resistant layer, 2 parts (in terms of solid content) of an ethylene oxide (EO)-propylene oxide (PO) copolymer (solid content concentration: 70 mass%; polymerization ratio: EO/PO = 1/1 (mass ratio)) as a wetting agent, and deionized water such that the solid content concentration was 20 mass% were mixed relative to 100 parts of the particulate polymer so as to produce a slurry composition for an adhesive layer.

<Production of positive electrode>

A mixture adjusted to a total solid content concentration of 70% was obtained by mixing 100 parts of $LiCoO_2$ (volume-average particle diameter D50: 12 $\mu$m) as a positive electrode active material, 2 parts of acetylene black (HS-100 produced by Denka Company Limited) as a conductive material, and 2 parts (in terms of solid content) of polyvinylidene fluoride (produced by Kureha Corporation; product name: #7208) as a binder with N-methylpyrrolidone as a solvent. The obtained mixture was mixed by a planetary mixer to produce a slurry composition for a non-aqueous secondary battery positive electrode.
The slurry composition for a positive electrode obtained as described above was applied onto aluminum foil of 20 $\mu$m in thickness serving as a current collector using a comma coater such as to have a thickness after drying of approximately 150 $\mu$m. The slurry composition was dried by conveying the aluminum foil inside a 60°C oven for 2 minutes at a speed of 0.5 m/min. Thereafter, 2 minutes of heat treatment was performed at 120°C to obtain a pre-pressing positive electrode web. The pre-pressing positive electrode web was rolled by roll pressing to obtain a post-pressing positive electrode having a positive electrode mixed material layer thickness of 80 $\mu$m.

<Production of negative electrode>

A 5 MPa pressure-resistant vessel equipped with a stirrer was charged with 33.5 parts of 1,3-butadiene, 3.5 parts of itaconic acid, 62 parts of styrene, 1 part of 2-hydroxyethyl acrylate, 0.4 parts of sodium dodecylbenzenesulfonate as an emulsifier, 150 parts of deionized water, and 0.5 parts of potassium persulfate as a polymerization initiator. These materials were sufficiently stirred and were then heated to 50°C to initiate polymerization. The reaction was quenched by cooling at the point at which the polymerization conversion rate reached 96% to yield a mixture containing a particulate binder (styrene-butadiene copolymer (SBR)). The mixture was adjusted to pH 8 through addition of 5% sodium hydroxide aqueous solution and was then subjected to thermal-vacuum distillation to remove unreacted monomer. Thereafter, the mixture was cooled to 30°C or lower to obtain a water dispersion containing a particulate binder for a negative electrode.
Next, 100 parts of artificial graphite (volume-average particle diameter D50: 15.6 $\mu$m) as a negative electrode active material and 1 part (in terms of solid content) of a 2% aqueous solution of carboxymethyl cellulose sodium salt (MAC350HC produced by Nippon Paper Industries Co., Ltd.) as a viscosity modifier were mixed, deionized water was further added to adjust the solid content concentration to 68%, and then 60 minutes of mixing was performed at 25°C. Next, the solid content concentration was adjusted to 62% with deionized water, and a further 15 minutes of mixing was performed at 25°C. Thereafter, 1.5 parts in terms of solid content of the water dispersion containing the particulate binder for a negative electrode was added to the resultant mixture, the final solid content concentration was adjusted to 52% with deionized water, and a further 10 minutes of mixing was performed. The resultant mixture was subjected to a defoaming process under reduced pressure to yield a slurry composition for a non-aqueous secondary battery negative electrode having good fluidity.

The slurry composition for a negative electrode obtained as described above was applied onto copper foil of 20 μm in thickness serving as a current collector using a comma coater such as to have a thickness after drying of approximately 150 μm. The slurry composition was dried by conveying the copper foil inside a 60°C oven for 2 minutes at a speed of 0.5 m/min. Thereafter, 2 minutes of heat treatment was performed at 120°C to obtain a pre-pressing negative electrode web. The pre-pressing negative electrode web was rolled by roll pressing to obtain a post-pressing negative electrode having a negative electrode mixed material layer thickness of 80 μm.

<Production of separator>

A porous substrate (thickness: 16 μm; Gurley value: 210 s/100 cc) made from polyethylene was prepared as a separator substrate. The previously described slurry composition for a heat-resistant layer was applied onto one side of the prepared separator substrate and was dried at 50°C for 3 minutes to form a heat-resistant layer at one side of the separator substrate. Note that the thickness per one heat-resistant layer was 2 μm.

Next, the previously described slurry composition for an adhesive layer (composition for a functional layer) was applied by spray coating onto both sides of the separator substrate having the heat-resistant layer formed at one side, which was obtained as described above, and the slurry composition for an adhesive layer was dried at 50°C for 1 minute to produce a separator. Note that the thickness per one layer for the formed adhesive layers (functional layers) was 1 μm. The produced separator included a heat-resistant layer and an adhesive layer formed on the heat-resistant layer at one side of the separator substrate and included only an adhesive layer at the other side of the separator substrate. In other words, the separator included an adhesive layer, a heat-resistant layer, a separator substrate, and an adhesive layer in this order.

The blocking resistance of the produced separator was evaluated. Moreover, the produced separator was used with the positive electrode and the negative electrode produced by the methods described above to evaluate the adhesiveness of the separator to an electrode after immersion in electrolyte solution. The results are shown in Table 1.

<Production of lithium ion secondary battery>

The post-pressing positive electrode obtained as described above was cut out to 49 cm × 5 cm and was placed with a surface at the positive electrode mixed material layer side thereof facing upward. The separator was cut out as 120 cm × 5.5 cm and was arranged on the positive electrode such that the positive electrode was positioned at a longitudinal direction left-hand side of the separator. During the above, a surface of the separator where a heat-resistant layer and an adhesive layer were included on the separator substrate and a surface of the positive electrode at the positive electrode mixed material layer side thereof were overlapped. In addition, the post-pressing negative electrode obtained as described above was cut out to 50 cm × 5.2 cm and was arranged such that a surface of the separator where only an adhesive layer was included on the separator substrate and a surface of the negative electrode at the negative electrode mixed material layer side thereof overlapped and such that the negative electrode was positioned at a longitudinal direction right-hand side of the separator. The resultant laminate was wound by a winding machine with the longitudinal direction middle of the separator at the center to obtain a roll. The roll was pressed at 60°C and 0.5 MPa to obtain a flattened roll that was then enclosed in an aluminum packing case serving as a battery case to obtain a pre-injection wound lithium ion secondary battery.

The pre-injection wound lithium ion secondary battery was used to evaluate injectability of electrolyte solution in production of a secondary battery by the previously described method. The result is shown in Table 3.

With respect to a wound lithium ion secondary battery (among pre-injection wound lithium ion secondary batteries that were produced) for which it had been possible to inject electrolyte solution such that no air remained in evaluation of electrolyte solution injectability, the aluminum packing case was closed by heat sealing at 150°C to complete a wound lithium ion secondary battery having a discharge capacity of 800 mAh.

The high-temperature cycle characteristics of the produced lithium ion secondary battery were evaluated. The result is shown in Table 3.

(Example 1-2)

A particulate polymer, organic non-conductive porous particles, a binder for a heat-resistant layer, a slurry composition for a heat-resistant layer, a slurry composition for an adhesive layer, a positive electrode, a negative electrode, a separator, and a lithium ion secondary battery were produced in the same way as in Example 1-1 with the exception that in production of the organic non-conductive porous particles in Example 1-1, the amount of divinylbenzene used as a monomer was changed from 50 parts to 40 parts, and the amount of cyclohexane used as a non-polar solvent was changed from 45 parts to 55 parts. Moreover, measurements and evaluations were performed in the same way as in Example 1-1. The results are shown in Tables 1 and 3.

(Example 1-3)

A particulate polymer, organic non-conductive porous particles, a binder for a heat-resistant layer, a slurry composition for a heat-resistant layer, a slurry composition for an adhesive layer, a positive electrode, a negative electrode, a separator, and a lithium ion secondary battery were produced in the same way as in Example 1-1 with the exception that in production of the organic non-conductive porous particles in Example 1-1, the amount of divinylbenzene used as a monomer was changed from 50 parts to 55 parts, and the amount of cyclohexane used as a non-polar solvent was changed from 45 parts to 40 parts. Moreover, measurements and evaluations were performed in the same way as in Example 1-1. The results are shown in Tables 1 and 3.

(Example 1-4)

A particulate polymer, organic non-conductive porous particles, a binder for a heat-resistant layer, a slurry composition for a heat-resistant layer, a slurry composition for an adhesive layer, a positive electrode, a negative electrode, a separator, and a lithium ion secondary battery were produced in the same way as in Example 1-1 with the exception that the amount of sodium dodecylbenzenesulfonate used as an emulsifier in production of the organic non-conductive porous particles in Example 1-1 was changed from 2 parts to 4 parts so as to reduce the volume-average particle diameter D50 of the obtained organic non-conductive porous particles. Moreover, measurements and evaluations were performed in the same way as in Example 1-1. The results are shown in Tables 1 and 3.

(Example 1-5)

A particulate polymer, organic non-conductive porous particles, a binder for a heat-resistant layer, a slurry composition for a heat-resistant layer, a slurry composition for an adhesive layer, a positive electrode, a negative electrode, a separator, and a lithium ion secondary battery were produced in the same way as in Example 1-1 with the exception that the amount of sodium dodecylbenzenesulfonate used as an emulsifier in production of the organic non-conductive porous particles in Example 1-1 was changed from 2 parts to 1 part so as to increase the volume-average particle diameter D50 of the obtained organic non-conductive porous particles. Moreover, measurements and evaluations were performed in the same way as in Example 1-1. The results are shown in Tables 1 and 3.

(Example 1-6)

A particulate polymer, organic non-conductive porous particles, a binder for a heat-resistant layer, a slurry composition for a heat-resistant layer, a slurry composition for an adhesive layer, a positive electrode, a negative electrode, a separator, and a lithium ion secondary battery were produced in the same way as in Example 1-1 with the exception that the amount of the water dispersion containing the non-conductive porous particles that was used in production of the slurry composition for an adhesive layer in Example 1-1 was changed from 40 parts by volume to 90 parts by volume (in terms of volume of non-conductive porous particles). Moreover, measurements and evaluations were performed in the same way as in Example 1-1. The results are shown in Tables 1 and 3.

(Example 1-7)

A particulate polymer, organic non-conductive porous particles, a binder for a heat-resistant layer, a slurry composition for a heat-resistant layer, a slurry composition for an adhesive layer, a positive electrode, a negative electrode, a separator, and a lithium ion secondary battery were produced in the same way as in Example 1-1 with the exception that the amount of the water dispersion containing the non-conductive porous particles that was used in production of the slurry composition for an adhesive layer in Example 1-1 was changed from 40 parts by volume to 10 parts by volume (in terms of volume of non-conductive porous particles). Moreover, measurements and evaluations were performed in the same way as in Example 1-1. The results are shown in Tables 1 and 3.

(Comparative Example 1-1)

Organic non-conductive porous particles, a binder for a heat-resistant layer, a slurry composition for a heat-resistant layer, a slurry composition for an adhesive layer, a positive electrode, a negative electrode, and a separator were produced in the same way as in Example 1-1 with the exception that in production of the slurry composition for an adhesive layer in Example 1-1, a water dispersion of a particulate polymer including only a core portion that was produced by the following method was used instead of the water dispersion containing the particulate polymer having a core-shell structure. Moreover, measurements and evaluations were performed in the same way as in Example 1-1 for evaluations shown in the tables. The results are shown in Table 1.

<Production of particulate polymer including only core portion>

A reactor including a stirrer was supplied with 100 parts of deionized water and 0.5 parts of ammonium persulfate as a polymerization initiator. The gas phase was purged with nitrogen gas and heating was performed to 60°C. Meanwhile, a monomer composition for core portion formation was obtained in a separate vessel by mixing 50 parts of deionized water, 0.3 parts of sodium dodecylbenzenesulfonate as an emulsifier, 30.4 parts of butyl acrylate (BA) and 45.0 parts of methyl methacrylate (MMA) as (meth)acrylic acid alkyl ester monomers, 4.0 parts of methacrylic acid (MAA) as an acidic group-containing monomer, 20.0 parts of acrylonitrile (AN) as a nitrile group-containing monomer, and 0.6 parts of allyl methacrylate (AMA) as a cross-linkable monomer. The monomer composition for core portion formation was continuously added into the aforementioned reactor over 4 hours to carry out polymerization at 60°C. Polymerization was continued until a polymerization conversion rate of 98% was reached to yield a water dispersion containing a particulate polymer including only a core portion.

The volume-average particle diameter D50, degree of swelling in electrolyte solution, and glass-transition temperature of the obtained particulate polymer including only a core portion were measured. The results are shown in Table 1.

(Comparative Example 1-2)

A particulate polymer, organic non-conductive porous particles, a binder for a heat-resistant layer, a slurry composition for a heat-resistant layer, a slurry composition for an adhesive layer, a positive electrode, a negative electrode, and a separator were produced in the same way as in Comparative Example 1-1 with the exception that the amount of sodium dodecylbenzenesulfonate used in production of the particulate polymer including only a core portion in Comparative Example 1-1 was changed from 0.3 parts to 0.8 parts so as to reduce the volume-average particle diameter D50 of the obtained particulate polymer including only a core portion, and the amount of the water dispersion containing the non-conductive porous particles that was used in production of the slurry composition for an adhesive layer in Comparative Example 1-1 was changed from 40 parts by volume to 660 parts by volume. Moreover, measurements and evaluations were performed in the same way as in Comparative Example 1-1. The results are shown in Table 1.

(Example 2-1)

A particulate polymer, a binder for a heat-resistant layer, a slurry composition for a heat-resistant layer, a slurry composition for an adhesive layer, a positive electrode, a negative electrode, a separator, and a lithium ion secondary battery were produced in the same way as in Example 1-1 with the exception that organic/inorganic hybrid non-conductive porous particles produced by the following method were used instead of the organic non-conductive porous particles in production of the slurry composition for an adhesive layer in Example 1-1. Moreover, measurements and evaluations were performed in the same way as in Example 1-1 with the exception that the degree of swelling in electrolyte solution and glass-transition temperature of the non-conductive porous particles were not measured. The results are shown in Tables 2 and 4.

<Production of organic/inorganic hybrid non-conductive porous particles>

A mixture was produced in a stainless steel vessel by adding 100 parts of titanium oxide A (A-250 produced by Ishihara Sangyo Kaisha, Ltd.; volume-average particle diameter D50: 160 nm) as inorganic particles (inorganic material), 5 parts of acetoalkoxyaluminum diisopropylate (PLENACT AL-M produced by Ajinomoto Fine-Techno Co., Ltd.) as a dispersant, and cyclohexane as a non-polar solvent such that the solid content was 20%. This mixture was treated for 15 minutes using an ultrasonic disperser (UP400 produced by Hielscher Ultrasonics GmbH) to obtain an inorganic particle dispersion liquid. Next, a cyclohexane solution of styrene-isoprene copolymer (SIS) (QTC3280 produced by ZEON CORPORATION) was added as an organic material (polymer) to the inorganic particle dispersion liquid, the mixing ratio of the inorganic particles and SIS (dry state) was adjusted to 70:30 (volume ratio), and 15 minutes of treatment was performed by the ultrasonic disperser to obtain a mixture A of an inorganic material and an organic material. An aqueous solution containing 2 mass% of sodium dodecylbenzenesulfonate was then produced and was added to the mixture A. In addition, 15 minutes of treatment was performed by the ultrasonic disperser to emulsify the mixture A in water. A rotary evaporator (R-300 produced by BUCHI Labortechnik AG) was used to remove cyclohexane from the resultant emulsion to obtain a water dispersion containing organic/inorganic hybrid non-conductive porous particles.

The BET specific surface area and volume-average particle diameter D50 of the obtained organic/inorganic hybrid non-conductive porous particles were measured. The results are shown in Tables 2 and 4.

(Example 2-2)

A particulate polymer, organic/inorganic hybrid non-conductive porous particles, a binder for a heat-resistant layer, a slurry composition for a heat-resistant layer, a slurry composition for an adhesive layer, a positive electrode, a negative electrode, a separator, and a lithium ion secondary battery were produced in the same way as in Example 2-1 with the exception that titanium oxide B (MTY-700BA produced by Tayca Corporation; volume-average particle diameter D50: 80 nm) was used instead of the titanium oxide A in production of the organic/inorganic hybrid non-conductive porous particles in Example 2-1. Moreover, measurements and evaluations were performed in the same way as in Example 2-1. The results are shown in Tables 2 and 4.

(Example 2-3)

A particulate polymer, organic/inorganic hybrid non-conductive porous particles, a binder for a heat-resistant layer, a slurry composition for a heat-resistant layer, a slurry composition for an adhesive layer, a positive electrode, a negative electrode, a separator, and a lithium ion secondary battery were produced in the same way as in Example 2-1 with the exception that titanium oxide C (PFC106 produced by Ishihara Sangyo Kaisha, Ltd.; volume-average particle diameter D50: 280 nm) was used instead of the titanium oxide A in production of the organic/inorganic hybrid non-conductive porous particles in Example 2-1. Moreover, measurements and evaluations were performed in the same way as in Example 2-1. The results are shown in Tables 2 and 4.

(Example 2-4)

A particulate polymer, organic/inorganic hybrid non-conductive porous particles, a binder for a heat-resistant layer, a slurry composition for a heat-resistant layer, a slurry composition for an adhesive layer, a positive electrode, a negative electrode, a separator, and a lithium ion secondary battery were produced in the same way as in Example 2-1 with the exception that alumina (A2-SP-C2 produced by Admatechs Company Limited; volume-average particle diameter D50: 300 nm) was used instead of the titanium oxide A in production of the organic/inorganic hybrid non-conductive porous particles in Example 2-1. Moreover, measurements and evaluations were performed in the same way as in Example 2-1. The results are shown in Tables 2 and 4.

(Example 2-5)

A particulate polymer, organic/inorganic hybrid non-conductive porous particles, a binder for a heat-resistant layer, a slurry composition for a heat-resistant layer, a slurry composition for an adhesive layer, a positive electrode, a negative electrode, a separator, and a lithium ion secondary battery were produced in the same way as in Example 2-1 with the exception that the mixing ratio of the inorganic particles and SIS in production of the organic/inorganic hybrid non-conductive porous particles in Example 2-1 was changed from 70:30 to 90:10 (volume ratio). Moreover, measurements and evaluations were performed in the same way as in Example 2-1. The results are shown in Tables 2 and 4.

(Example 2-6)

A particulate polymer, organic/inorganic hybrid non-conductive porous particles, a binder for a heat-resistant layer, a slurry composition for a heat-resistant layer, a slurry composition for an adhesive layer, a positive electrode, a negative electrode, a separator, and a lithium ion secondary battery were produced in the same way as in Example 2-1 with the exception that the mixing ratio of the inorganic particles and SIS in production of the organic/inorganic hybrid non-conductive porous particles in Example 2-1 was changed from 70:30 to 30:70 (volume ratio). Moreover, measurements and evaluations were performed in the same way as in Example 2-1. The results are shown in Tables 2 and 4.

(Example 2-7)

A particulate polymer, organic/inorganic hybrid non-conductive porous particles, a binder for a heat-resistant layer, a slurry composition for a heat-resistant layer, a slurry composition for an adhesive layer, a positive electrode, a negative electrode, a separator, and a lithium ion secondary battery were produced in the same way as in Example 2-1 with the exception that the particulate binder for a negative electrode (SBR) used in negative electrode production was used instead of SIS as an organic material in production of the organic/inorganic hybrid non-conductive porous particles in Example 2-1. Moreover, measurements and evaluations were performed in the same way as in Example 2-1. The results are shown in Tables 2 and 4.

(Example 2-8)

A particulate polymer, organic/inorganic hybrid non-conductive porous particles, a binder for a heat-resistant layer, a slurry composition for a heat-resistant layer, a slurry composition for an adhesive layer, a positive electrode, a negative electrode, a separator, and a lithium ion secondary battery were produced in the same way as in Example 2-1 with the exception that the acrylic polymer produced as a binder for a heat-resistant layer was used instead of SIS as an organic material in production of the organic/inorganic hybrid non-conductive porous particles in Example 2-1. Moreover, measurements and evaluations were performed in the same way as in Example 2-1. The results are shown in Tables 2 and 4.

(Example 2-9)

A particulate polymer, organic/inorganic hybrid non-conductive porous particles, a binder for a heat-resistant layer, a slurry composition for a heat-resistant layer, a slurry composition for an adhesive layer, a positive electrode, a negative electrode, a separator, and a lithium ion secondary battery were produced in the same way as in Example 2-1 with the exception that the amount of the water dispersion containing the non-conductive porous particles that was used in production of the slurry composition for an adhesive layer in Example 2-1 was changed from 40 parts by volume to 90 parts by volume (in terms of volume of non-conductive porous particles). Moreover, measurements and evaluations were performed in the same way as in Example 2-1. The results are shown in Tables 2 and 4.

(Example 2-10)

A particulate polymer, organic/inorganic hybrid non-conductive porous particles, a binder for a heat-resistant layer, a slurry composition for a heat-resistant layer, a slurry composition for an adhesive layer, a positive electrode, a negative electrode, a separator, and a lithium ion secondary battery were produced in the same way as in Example 2-1 with the exception that the amount of the water dispersion containing the non-conductive porous particles that was used in production of the slurry composition for an adhesive layer in Example 2-1 was changed from 40 parts by volume to 10 parts by volume (in terms of volume of non-conductive porous particles). Moreover, measurements and evaluations were performed in the same way as in Example 2-1. The results are shown in Tables 2 and 4.

(Comparative Example 2-1)

Organic/inorganic hybrid non-conductive porous particles, a binder for a heat-resistant layer, a slurry composition for a heat-resistant layer, a slurry composition for an adhesive layer, a positive electrode, a negative electrode, and a separator were produced in the same way as in Example 2-1 with the exception that in production of the slurry composition for an adhesive layer in Example 2-1, the water dispersion of the particulate polymer including only a core portion that was produced in Comparative Example 1-1 was used instead of the water dispersion containing the particulate polymer having a core-shell structure. Moreover, measurements and evaluations were performed in the same way as in Example 2-1 for evaluations shown in the tables. The results are shown in Table 2.

(Comparative Example 2-2)

Organic/inorganic hybrid non-conductive porous particles, a binder for a heat-resistant layer, a slurry composition for a heat-resistant layer, a slurry composition for an adhesive layer, a positive electrode, a negative electrode, and a separator were produced in the same way as in Comparative Example 2-1 with the exception that in production of the slurry composition for an adhesive layer in Comparative Example 2-1, the water dispersion of the particulate polymer including only a core portion that was produced in Comparative Example 1-1 was replaced with the water dispersion of the particulate polymer including only a core portion that was produced in Comparative Example 1-2, which had a smaller volume-average particle diameter D50, and the amount of the water dispersion containing the organic/inorganic hybrid non-conductive porous particles that was used was changed from 40 parts by volume to 660 parts by volume. Moreover, measurements and evaluations were performed in the same way as in Comparative Example 2-1. The results are shown in Table 2.

In the tables:

"BA" indicates butyl acrylate;
"MMA" indicates methyl methacrylate;
"MAA" indicates methacrylic acid;
"AN" indicates acrylonitrile;
"AMA" indicates allyl methacrylate;
"ST" indicates styrene;
"SIS" indicates styrene-isoprene copolymer; and
"SBR" indicates styrene-butadiene copolymer.

Table 1

| | | | Example 1-1 | Example 1-2 | Example 1-3 | Example 1-4 | Example 1-5 | Example 1-6 | Example 1-7 | Comparative Example 1-1 | Comparative Example 1-2 |
|---|---|---|---|---|---|---|---|---|---|---|---|
| Particulate polymer | Chemical composition of monomers [mass%] | Core portion | (Meth)acrylic acid alkyl ester monomer | BA | 21.3 | 21.3 | 21.3 | 21.3 | 21.3 | 21.3 | 21.3 | 30.4 | 30.4 |
| | | | | MMA | 31.5 | 31.5 | 31.5 | 31.5 | 31.5 | 31.5 | 31.5 | 45.0 | 45.0 |
| | | | Acidic group-containing monomer | MAA | 2.8 | 2.8 | 2.8 | 2.8 | 2.8 | 2.8 | 2.8 | 4.0 | 4.0 |
| | | | Nitrile group-containing monomer | AN | 14.0 | 14.0 | 14.0 | 14.0 | 14.0 | 14.0 | 14.0 | 20.0 | 20.0 |
| | | | Cross-linkable monomer | AMA | 0.4 | 0.4 | 0.4 | 0.4 | 0.4 | 0.4 | 0.4 | 0.6 | 0.6 |
| | | Shell portion | Aromatic vinyl monomer | ST | 28.2 | 28.2 | 28.2 | 28.2 | 28.2 | 28.2 | 28.2 | - | - |
| | | | Nitrile group-containing monomer | AN | 1.5 | 1.5 | 1.5 | 1.5 | 1.5 | 1.5 | 1.5 | - | - |
| | | | Acidic group-containing monomer | MAA | 0.3 | 0.3 | 0.3 | 0.3 | 0.3 | 0.3 | 0.3 | - | - |
| | Mass ratio (core portion/shell portion) | | | | 70/30 | 70/30 | 70/30 | 70/30 | 70/30 | 70/30 | 70/30 | 100/0 | 100/0 |
| | Degree of swelling in electrolyte solution [mass%] | | Core portion | | 400 | 400 | 400 | 400 | 400 | 400 | 400 | 400 | 400 |
| | | | Shell portion | | 170 | 170 | 170 | 170 | 170 | 170 | 170 | - | - |
| | Glass-transition temperature [°C] | | Core portion | | 52 | 52 | 52 | 52 | 52 | 52 | 52 | 52 | 52 |
| | | | Shell portion | | 106 | 106 | 106 | 106 | 106 | 106 | 106 | - | - |
| | Volume-average particle diameter D50 [μm] | | | | 0.60 | 0.60 | 0.60 | 0.60 | 0.60 | 0.60 | 0.60 | 0.60 | 0.18 |

(continued)

| | | | | Example 1-1 | Example 1-2 | Example 1-3 | Example 1-4 | Example 1-5 | Example 1-6 | Example 1-7 | Comparative Example 1-1 | Comparative Example 1-2 |
|---|---|---|---|---|---|---|---|---|---|---|---|---|
| Organic non-conductive porous particles | Chemical composition of monomer mixture [mass%] | Monomer | Divinylbenzene | 50 | 40 | 55 | 50 | 50 | 50 | 50 | 50 | 50 |
| | | Non-polar solvent | Cyclohexane | 45 | 55 | 40 | 45 | 45 | 45 | 45 | 45 | 45 |
| | | Hydrophobe | Hexadecane | 5 | 5 | 5 | 5 | 5 | 5 | 5 | 5 | 5 |
| | Degree of swelling in electrolyte solution [mass%] | | | 160 | 140 | 180 | 160 | 160 | 160 | 160 | 160 | 160 |
| | Glass-transition temperature [°C] | | | 103 | 100 | 109 | 103 | 103 | 103 | 103 | 103 | 103 |
| | Volume-average particle diameter D50 [$\mu$m] | | | 0.50 | 0.50 | 0.50 | 0.30 | 1.10 | 0.50 | 0.50 | 0.50 | 0.50 |
| | BET specific surface area [$m^2/cm^3$] | | | 40 | 83 | 26 | 62 | 27 | 40 | 40 | 40 | 40 |
| Formulation | Particulate polymer [parts by volume] | | | 100 | 100 | 100 | 100 | 100 | 100 | 100 | 100 | 100 |
| | Non-conductive porous particles [parts by volume] | | | 40 | 40 | 40 | 40 | 40 | 90 | 10 | 40 | 660 |
| Evaluations | Adhesiveness of separator to electrode | | | A | A | A | A | B | B | A | C | D |
| | Blocking resistance of separator | | | A | A | A | A | A | A | A | D | D |

EP 3 876 304 A1

Table 2

| | | | | | Example 2-1 | Example 2-2 | Example 2-3 | Example 2-4 | Example 2-5 | Example 2-6 | Example 2-7 | Example 2-8 | Example 2-9 | Example 2-10 | Comparative Example 2-1 | Comparative Example 2-2 |
|---|---|---|---|---|---|---|---|---|---|---|---|---|---|---|---|---|
| Particulate polymer | Chemical composition of monomers [mass%] | Core portion | (Meth)acrylic acid alkyl ester monomer | BA | 21.3 | 21.3 | 21.3 | 21.3 | 21.3 | 21.3 | 21.3 | 21.3 | 21.3 | 21.3 | 30.4 | 30.4 |
| | | | | MMA | 31.5 | 31.5 | 31.5 | 31.5 | 31.5 | 31.5 | 31.5 | 31.5 | 31.5 | 31.5 | 45 | 45 |
| | | | Acidic group-containing monomer | MAA | 2.8 | 2.8 | 2.8 | 2.8 | 2.8 | 2.8 | 2.8 | 2.8 | 2.8 | 2.8 | 4.0 | 4.0 |
| | | | Nitrile group-containing monomer | AN | 14.0 | 14.0 | 14.0 | 14.0 | 14.0 | 14.0 | 14.0 | 14.0 | 14.0 | 14.0 | 20.0 | 20.0 |
| | | | Cross-linkable monomer | AMA | 0.4 | 0.4 | 0.4 | 0.4 | 0.4 | 0.4 | 0.4 | 0.4 | 0.4 | 0.4 | 0.6 | 0.6 |
| | | Shell portion | Aromatic vinyl monomer | ST | 28.2 | 28.2 | 28.2 | 28.2 | 28.2 | 28.2 | 28.2 | 28.2 | 28.2 | 28.2 | - | - |
| | | | Nitrile group-containing monomer | AN | 1.5 | 1.5 | 1.5 | 1.5 | 1.5 | 1.5 | 1.5 | 1.5 | 1.5 | 1.5 | - | - |
| | | | Acidic group-containing monomer | MAA | 0.3 | 0.3 | 0.3 | 0.3 | 0.3 | 0.3 | 0.3 | 0.3 | 0.3 | 0.3 | - | - |

34

(continued)

| | | Example 2-1 | Example 2-2 | Example 2-3 | Example 2-4 | Example 2-5 | Example 2-6 | Example 2-7 | Example 2-8 | Example 2-9 | Example 2-10 | Comparative Example 2-1 | Comparative Example 2-2 |
|---|---|---|---|---|---|---|---|---|---|---|---|---|---|
| | Mass ratio (core portion/shell portion) | 70/30 | 70/30 | 70/30 | 70/30 | 70/30 | 70/30 | 70/30 | 70/30 | 70/30 | 70/30 | 100/0 | 100/0 |
| Degree of swelling in electrolyte solution [mass%] | Core portion | 400 | 400 | 400 | 400 | 400 | 400 | 400 | 400 | 400 | 400 | 400 | 400 |
| | Shell portion | 170 | 170 | 170 | 170 | 170 | 170 | 170 | 170 | 170 | 170 | - | - |
| Glass-transition temperature [°C] | Core portion | 52 | 52 | 52 | 52 | 52 | 52 | 52 | 52 | 52 | 52 | 52 | 52 |
| | Shell portion | 106 | 106 | 106 | 106 | 106 | 106 | 106 | 106 | 106 | 106 | - | - |
| | Volume-average particle diameter D50 [μm] | 0.60 | 0.60 | 0.60 | 0.60 | 0.60 | 0.60 | 0.60 | 0.60 | 0.60 | 0.60 | 0.60 | 0.18 |
| Organic/ inorganic hybrid non-conductive porous particles | Inorganic material — Type | Titanium oxide A | Titanium oxide B | Titanium oxide C | Alumina | Titanium oxide A | Titanium oxide A | Titanium oxide A | Titanium oxide A | Titanium oxide A | Titanium oxide A | Titanium oxide A | Titanium oxide A |
| | Inorganic material — Volume-average particle diameter D50 [μm] | 0.16 | 0.08 | 0.28 | 0.30 | 0.16 | 0.16 | 0.16 | 0.16 | 0.16 | 0.16 | 0.16 | 0.16 |
| | Organic material — Type | SIS | SIS | SIS | SIS | SIS | SIS | SBR | Acrylic polymer | SIS | SIS | SIS | SIS |
| | Volume ratio (inorganic material/organic material) | 7/3 | 7/3 | 7/3 | 7/3 | 9/1 | 3/7 | 7/3 | 7/3 | 7/3 | 7/3 | 7/3 | 7/3 |
| | Volume-average particle diameter D50 [μm] | 0.50 | 0.30 | 0.55 | 0.60 | 0.50 | 0.50 | 0.50 | 0.50 | 0.50 | 0.50 | 0.50 | 0.50 |
| | BET specific surface area [m$^2$/cm$^3$] | 41 | 82 | 29 | 27 | 33 | 21 | 41 | 41 | 41 | 41 | 41 | 41 |
| Formulation | Particulate polymer [parts by volume] | 100 | 100 | 100 | 100 | 100 | 100 | 100 | 100 | 100 | 100 | 100 | 100 |
| | Non-conductive porous particles [parts by volume] | 40 | 40 | 40 | 40 | 40 | 40 | 40 | 40 | 90 | 10 | 40 | 660 |
| Evaluations | Adhesiveness of separator to electrode | A | A | A | A | A | A | A | A | B | A | C | D |
| | Blocking resistance of separator | A | A | A | A | A | A | A | A | A | A | D | D |

EP 3 876 304 A1

35

Table 3

| | | | | | Example 1-1 | Example 1-2 | Example 1-3 | Example 1-4 | Example 1-5 | Example 1-6 | Example 1-7 |
|---|---|---|---|---|---|---|---|---|---|---|---|
| Particulate polymer | Chemical composition of monomers [mass%] | Core portion | (Meth)acrylic acid alkyl ester monomer | BA | 21.3 | 21.3 | 21.3 | 21.3 | 21.3 | 21.3 | 21.3 |
| | | | | MMA | 31.5 | 31.5 | 31.5 | 31.5 | 31.5 | 31.5 | 31.5 |
| | | | Acidic group-containing monomer | MAA | 2.8 | 2.8 | 2.8 | 2.8 | 2.8 | 2.8 | 2.8 |
| | | | Nitrile group-containing monomer | AN | 14.0 | 14.0 | 14.0 | 14.0 | 14.0 | 14.0 | 14.0 |
| | | | Cross-linkable monomer | AMA | 0.4 | 0.4 | 0.4 | 0.4 | 0.4 | 0.4 | 0.4 |
| | | Shell portion | Aromatic vinyl monomer | ST | 28.2 | 28.2 | 28.2 | 28.2 | 28.2 | 28.2 | 28.2 |
| | | | Nitrile group-containing monomer | AN | 1.5 | 1.5 | 1.5 | 1.5 | 1.5 | 1.5 | 1.5 |
| | | | Acidic group-containing monomer | MAA | 0.3 | 0.3 | 0.3 | 0.3 | 0.3 | 0.3 | 0.3 |
| | Mass ratio (core portion/shell portion) | | | | 70/30 | 70/30 | 70/30 | 70/30 | 70/30 | 70/30 | 70/30 |
| | Degree of swelling in electrolyte solution [mass%] | Core portion | | | 400 | 400 | 400 | 400 | 400 | 400 | 400 |
| | | Shell portion | | | 170 | 170 | 170 | 170 | 170 | 170 | 170 |
| | Glass-transition temperature [°C] | Core portion | | | 52 | 52 | 52 | 52 | 52 | 52 | 52 |
| | | Shell portion | | | 106 | 106 | 106 | 106 | 106 | 106 | 106 |
| | Volume-average particle diameter D50 [μm] | | | | 0.60 | 0.60 | 0.60 | 0.60 | 0.60 | 0.60 | 0.60 |

(continued)

| | | | | Example 1-1 | Example 1-2 | Example 1-3 | Example 1-4 | Example 1-5 | Example 1-6 | Example 1-7 |
|---|---|---|---|---|---|---|---|---|---|---|
| Organic non-conductive porous particles | Chemical composition of monomer mixture [mass%] | Monomer | Divinylbenzene | 50 | 40 | 55 | 50 | 50 | 50 | 50 |
| | | Non-polar solvent | Cyclohexane | 45 | 55 | 40 | 45 | 45 | 45 | 45 |
| | | Hydrophobe | Hexadecane | 5 | 5 | 5 | 5 | 5 | 5 | 5 |
| | Degree of swelling in electrolyte solution [mass%] | | | 160 | 140 | 180 | 160 | 160 | 160 | 160 |
| | Glass-transition temperature [°C] | | | 103 | 100 | 109 | 103 | 103 | 103 | 103 |
| | Volume-average particle diameter D50 [$\mu$m] | | | 0.50 | 0.50 | 0.50 | 0.30 | 1.10 | 0.50 | 0.50 |
| | BET specific surface area [$m^2/cm^3$] | | | 40 | 83 | 26 | 62 | 27 | 40 | 40 |
| Formulation | Particulate polymer [parts by volume] | | | 100 | 100 | 100 | 100 | 100 | 100 | 100 |
| | Non-conductive porous particles [parts by volume] | | | 40 | 40 | 40 | 40 | 40 | 90 | 10 |
| Evaluations | Injectability in secondary battery production | | | A | A | B | B | B | A | B |
| | High-temperature cycle characteristics of secondary battery | | | A | B | B | B | B | B | B |

Table 4

| | | | | Example 2-1 | Example 2-2 | Example 2-3 | Example 2-4 | Example 2-5 | Example 2-6 | Example 2-7 | Example 2-8 | Example 2-9 | Example 2-10 |
|---|---|---|---|---|---|---|---|---|---|---|---|---|---|
| Particulate polymer | Chemical composition of monomers [mass%] | Core portion | (Meth) acrylic acid alkyl ester monomer | BA | 21.3 | 21.3 | 21.3 | 21.3 | 21.3 | 21.3 | 21.3 | 21.3 | 21.3 | 21.3 |
| | | | | MMA | 31.5 | 31.5 | 31.5 | 31.5 | 31.5 | 31.5 | 31.5 | 31.5 | 31.5 | 31.5 |
| | | | Acidic group-containing monomer | MAA | 2.8 | 2.8 | 2.8 | 2.8 | 2.8 | 2.8 | 2.8 | 2.8 | 2.8 | 2.8 |
| | | | Nitrile group-containing monomer | AN | 14.0 | 14.0 | 14.0 | 14.0 | 14.0 | 14.0 | 14.0 | 14.0 | 14.0 | 14.0 |
| | | | Cross-linkable monomer | AMA | 0.4 | 0.4 | 0.4 | 0.4 | 0.4 | 0.4 | 0.4 | 0.4 | 0.4 | 0.4 |
| | | | Aromatic vinyl monomer | ST | 28.2 | 28.2 | 28.2 | 28.2 | 28.2 | 28.2 | 28.2 | 28.2 | 28.2 | 28.2 |
| | | Shell portion | Nitrile group-containing monomer | AN | 1.5 | 1.5 | 1.5 | 1.5 | 1.5 | 1.5 | 1.5 | 1.5 | 1.5 | 1.5 |
| | | | Acidic group-containing monomer | MAA | 0.3 | 0.3 | 0.3 | 0.3 | 0.3 | 0.3 | 0.3 | 0.3 | 0.3 | 0.3 |
| | Mass ratio (core portion/shell portion) | | | | 70/30 | 70/30 | 70/30 | 70/30 | 70/30 | 70/30 | 70/30 | 70/30 | 70/30 | 70/30 |
| | Degree of swelling in electrolyte solution [mass%] | Core portion | | | 400 | 400 | 400 | 400 | 400 | 400 | 400 | 400 | 400 | 400 |
| | | Shell portion | | | 170 | 170 | 170 | 170 | 170 | 170 | 170 | 170 | 170 | 170 |

|  |  |  | Example 2-1 | Example 2-2 | Example 2-3 | Example 2-4 | Example 2-5 | Example 2-6 | Example 2-7 | Example 2-8 | Example 2-9 | Example 2-10 |
|---|---|---|---|---|---|---|---|---|---|---|---|---|
|  | Glass-transition temperature [°C] | Core portion | 52 | 52 | 52 | 52 | 52 | 52 | 52 | 52 | 52 | 52 |
|  |  | Shell portion | 106 | 106 | 106 | 106 | 106 | 106 | 106 | 106 | 106 | 106 |
|  | Volume-average particle diameter D50 [μm] | | 0.60 | 0.60 | 0.60 | 0.60 | 0.60 | 0.60 | 0.60 | 0.60 | 0.60 | 0.60 |
| Organic/ inorganic hybrid non-conductive porous particles | Inorganic material | Type | Titanium oxide A | Titanium oxide B | Titanium oxide C | Alumina | Titanium oxide A | Titanium oxide A | Titanium oxide A | Titanium oxide A | Titanium oxide A | Titanium oxide A |
|  |  | Volume-average particle diameter D50 [μm] | 0.16 | 0.08 | 0.28 | 0.30 | 0.16 | 0.16 | 0.16 | 0.16 | 0.16 | 0.16 |
|  | Organic material | Type | SIS | SIS | SIS | SIS | SIS | SIS | SBR | Acrylic polymer | SIS | SIS |
|  | Volume ratio (inorganic material/organic material) | | 7/3 | 7/3 | 7/3 | 7/3 | 9/1 | 3/7 | 7/3 | 7/3 | 7/3 | 7/3 |
|  | Volume-average particle diameter D50 [μm] | | 0.50 | 0.30 | 0.55 | 0.60 | 0.50 | 0.50 | 0.50 | 0.50 | 0.50 | 0.50 |
|  | BET specific surface area [$m^2/cm^3$] | | 41 | 82 | 29 | 27 | 33 | 21 | 41 | 41 | 41 | 41 |
| Formulation | Particulate polymer [parts by volume] | | 100 | 100 | 100 | 100 | 100 | 100 | 100 | 100 | 100 | 100 |
|  | Non-conductive porous particles [parts by volume] | | 40 | 40 | 40 | 40 | 40 | 40 | 40 | 40 | 90 | 10 |
| Evaluations | Injectability in secondary battery production | | A | A | B | B | B | B | B | B | A | B |
|  | High-temperature cycle characteristics of secondary battery | | A | B | B | B | B | B | B | B | B | B |

EP 3 876 304 A1

39

It can be seen from Tables 1 and 2 that the separators of Examples 1-1 to 1-7 and 2-1 to 2-10, which each included, as an adhesive layer, a functional layer that was formed using a composition for a functional layer containing a particulate polymer having a specific core-shell structure and non-conductive porous particles containing an organic material, could each have a good balance of blocking resistance and adhesiveness to an electrode after immersion in electrolyte solution.

On the other hand, it can be seen that the separators produced in Comparative Examples 1-1, 1-2, 2-1, and 2-2 using a particulate polymer including only a core portion as a particulate polymer each had poor blocking resistance and poor adhesiveness to an electrode after immersion in electrolyte solution.

INDUSTRIAL APPLICABILITY

According to the present disclosure, it is possible to provide a composition for a non-aqueous secondary battery functional layer with which it is possible to form a functional layer that can cause a battery member including the functional layer to have a good balance of blocking resistance and adhesiveness to another battery member after immersion in electrolyte solution.

Moreover, according to the present disclosure, it is possible to provide a functional layer for a non-aqueous secondary battery that can cause a battery member including the functional layer to have a good balance of blocking resistance and adhesiveness to another battery member after immersion in electrolyte solution.

Furthermore, according to the present disclosure, it is possible to provide a separator for a non-aqueous secondary battery that includes the aforementioned functional layer and that can have a good balance of blocking resistance and adhesiveness to an electrode after immersion in electrolyte solution.

Also, according to the present disclosure, it is possible to provide a non-aqueous secondary battery that includes the aforementioned separator.

**Claims**

1. A composition for a non-aqueous secondary battery functional layer comprising: a particulate polymer; and non-conductive porous particles containing an organic material, wherein
   the particulate polymer has a core-shell structure including a core portion and a shell portion at least partially covering an outer surface of the core portion.

2. The composition for a non-aqueous secondary battery functional layer according to claim 1, wherein the non-conductive porous particles have a BET specific surface area of not less than 20 $m^2/cm^3$ and not more than 100 $m^2/cm^3$.

3. The composition for a non-aqueous secondary battery functional layer according to claim 1 or 2, wherein the non-conductive porous particles have a volume-average particle diameter D50 that is not less than 0.5 times and less than 1 time a volume-average particle diameter D50 of the particulate polymer.

4. The composition for a non-aqueous secondary battery functional layer according to any one of claims 1 to 3, wherein a volume ratio of the non-conductive porous particles relative to the particulate polymer is not less than 20/100 and less than 100/100.

5. The composition for a non-aqueous secondary battery functional layer according to any one of claims 1 to 4, wherein the non-conductive porous particles further contain an inorganic material.

6. The composition for a non-aqueous secondary battery functional layer according to any one of claims 1 to 5, wherein a mass ratio of the core portion relative to the shell portion in the particulate polymer is not less than 60/40 and not more than 99/1.

7. A functional layer for a non-aqueous secondary battery formed using the composition for a non-aqueous secondary battery functional layer according to any one of claims 1 to 6.

8. A separator for a non-aqueous secondary battery comprising the functional layer for a non-aqueous secondary battery according to claim 7.

9. A non-aqueous secondary battery comprising the separator for a non-aqueous secondary battery according to claim 8.

## INTERNATIONAL SEARCH REPORT

| International application No. |
|---|
| PCT/JP2019/039849 |

| A. CLASSIFICATION OF SUBJECT MATTER |
|---|
| Int. Cl. H01M2/16(2006.01)i, H01M4/13(2010.01)i |

According to International Patent Classification (IPC) or to both national classification and IPC

| B. FIELDS SEARCHED |
|---|

Minimum documentation searched (classification system followed by classification symbols)
Int. Cl. H01M2/16, H01M4/13

Documentation searched other than minimum documentation to the extent that such documents are included in the fields searched
```
Published examined utility model applications of Japan     1922-1996
Published unexamined utility model applications of Japan   1971-2019
Registered utility model specifications of Japan           1996-2019
Published registered utility model applications of Japan   1994-2019
```

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X | WO 2016/152026 A1 (NIPPON ZEON CO., LTD.) 29 September 2016, claims, paragraphs [0031], [0049], example 1 & US 2018/0053963 A1, claims, paragraphs [0043], [0077]-[0082], example 1 & EP 3273506 A1 & CN 107431169 A & KR 10-2017-0129125 A | 1-4, 6-9 |
| A |  | 5 |
| A | WO 2012/046843 A1 (NIPPON ZEON CO., LTD.) 12 April 2012, paragraphs [0087], [0092] & US 2013/0273421 A1, paragraphs [0117], [0122] & EP 2626930 A1 | 1-9 |
| A | WO 2012/043812 A1 (NIPPON ZEON CO., LTD.) 05 April 2012, paragraphs [0089], [0094] & CN 103238234 A & KR 10-2013-0114153 A | 1-9 |

☒ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 11.11.2019 | 26.11.2019 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2019/039849

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2014-060149 A (NIPPON ZEON CO., LTD.) 03 April 2014, paragraphs [0218], [0223] & WO 2014/024991 A1 & KR 10-2015-0043247 A | 1-9 |
| A | JP 2005-108454 A (TOSHIBA CORP.) 21 April 2005, claim 1, paragraph [0015] (Family: none) | 1-9 |
| A | JP 2015-502003 A (DOW GLOBAL TECHNOLOGIES L.L.C.) 19 January 2015, paragraph [0017] & US 2014/0255790 A1, paragraph [0020] & WO 2013/071043 A2 | 1-9 |

Form PCT/ISA/210 (continuation of second sheet) (January 2015)

**EP 3 876 304 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013147006 A1
- JP 2015041606 A
- WO 2012115096 A1
- WO 2016017066 A1
- JP 2013145763 A